# EUROPEAN PATENT SPECIFICATION

(11) **EP 3 385 560 B1**
(45) Date of publication and mention of the grant of the patent: **17.03.2021**
(21) Application number: 16870622.4
(22) Date of filing: 28.11.2016
(51) Int. Cl.: F16D 41/08, E06B 9/40, E06B 9/80, E06B 9/90

(54) **CLUTCH DEVICE AND SHIELDING DEVICE**
KUPPLUNGSVORRICHTUNG UND ABSCHIRMUNGSVORRICHTUNG
DISPOSITIF D'EMBRAYAGE ET DISPOSITIF DE BLINDAGE

(30) Priority: 03.12.2015 JP 2015236798
(43) Date of publication of application: 10.10.2018
(73) Proprietor: Tachikawa Corporation, Tokyo 108-8334 (JP)
(72) Inventor: TANIGAWA, Fumihiko, Tokyo 108-8334 (JP); TAKAYAMA, Yoshihiro, Tokyo 108-8334 (JP); NAKAMURA, Hajime, Tokyo 108-8334 (JP)
(74) Representative: Gulde & Partner
(86) International application number: PCT/JP2016/085240
(87) International publication number: WO 2017/094685

(56) References cited:
- WO-A1-2010/128872
- WO-A1-2014/143057
- JP-A- 2004 347 766
- JP-A- 2011 169 344
- JP-A- 2012 117 563
- JP-B2- 3 124 716
- JP-U- H0 628 195
- JP-U- S60 170 496

## Description

### TECHNICAL FIELD

The present invention relates to a clutch apparatus that selectively switches between restriction and allowance of relative rotation between a clutch drum and a clutch case, and a shielding apparatus including the clutch apparatus.

### BACKGROUND ART

Among roll screens, which are a type of shielding apparatuses, are those configured such that when pulling down a bottom rail or the like to unwind a screen until it reaches a desired height and releasing the screen in this state, the screen is held at the desired height by the rotation restriction function of a clutch apparatus disposed in a winding pipe; and when slightly lowering the screen in the rotation restriction state, the restriction function is released, and the screen is wound around the winding pipe by the energizing force of a coil spring disposed in the winding pipe.

For example, JP 6-013825 A discloses a clutch apparatus wherein a guide groove is formed between an non-rotatably supported clutch drum (brake drum) and a clutch case (clutch cap) fixed to a winding pipe (winding shaft); and when the winding pipe rotates, clutch balls (sliders) move relatively in the guide groove and then stopped by a stop part (stop groove) provided on the guide groove and thus the clutch drum and clutch case become relatively non-rotatable, that is, are placed in a rotation restriction state.

JP 3124716 B discloses a clutch apparatus wherein a guide groove includes four stop parts (stop grooves). For this reason, the amount of screen that is returned is smaller than that of JP 6-013825 A. As used herein, the term "the amount of screen that is returned" refers to the amount of screen that is returned before the clutch apparatus is activated and thus the rotation of the winding pipe (winding shaft) is restricted after unwinding the screen until it reaches to a desired position.

WO 2010/128872 A1 discloses a clutch apparatus for roller blinds comprising an endless guide groove and one ball that is able to relatively move along the guide groove. The guide groove includes two stop parts stopping the moving object and being offset one against another by a rotational angle of 180°.

### SUMMARY OF THE INVENTION

### Technical Problem

However, even in the configuration described in JP 3124716 B, there are intervals of 90° between the stop parts. For this reason, the winding pipe must rotate by an angle (return angle) of up to 90° before the rotation thereof is restricted, resulting in a failure to accurately stop the screen at the desired position.

The present invention has been made in view of the foregoing, and an object thereof is to provide a clutch apparatus capable of reducing return angle before relative rotation between a clutch drum and the clutch case is restricted.

### Solution to Problem

The present invention provides a clutch apparatus comprising: at least one clutch drum; a clutch case disposed around a perimeter of the clutch drum, wherein the clutch apparatus is capable of selectively switching between restriction and allowance of relative rotation between the clutch drum and the clutch case in one direction; an endless guide groove circumferentially provided on one of an outer surface of the clutch drum and an inner surface of the clutch case; slide grooves axially provided on the other of the outer circumferential surface of the clutch drum or the inner surface of the clutch case; and a plurality of moving objects disposed between the guide groove and the slide grooves and being capable of relatively moving along the guide groove with the relative rotation between the clutch drum and the clutch case. The guide groove includes: at least one stop part capable of stopping the moving objects, wherein when the moving objects are stopped by the stop part, relative rotation between the clutch drum and the clutch case in the one direction is restricted; a one-direction orbiting groove in which the moving objects orbit when the clutch drum and the clutch case are relatively rotated in the one direction. According to the invention the guide groove further includes: an other-direction orbiting groove in which the moving objects orbit when the clutch drum and the clutch case are relatively rotated in the other direction; and at least one return groove that guides the moving objects from the one-direction orbiting groove to the other-direction orbiting groove when the clutch drum and the clutch case are relatively rotated in the other direction with the moving objects located in the one-direction orbiting groove. The clutch apparatus is configured such that at least two of the moving objects are stopped by the stop part at different timings, and the clutch apparatus has at least one of configurations 1) and 2), wherein in configuration 1) the moving objects are disposed on a single guide groove, and in configuration 2) the guide groove includes a plurality of guide grooves and each guide groove includes at least one moving object.

By using the clutch apparatus of the present invention, at least two of the multiple moving objects are stopped by the stop part at different timings. Thus, the moving objects are stopped by the stop part more frequently, and the clutch case is rotated by a smaller average return angle before the relative rotation between the clutch drum and clutch case is restricted.

Various embodiments of the present invention are described below.

Preferably, the guide groove further includes at least one pass part that is disposed between the other-direction orbiting groove and the one-direction orbiting groove and circumferentially away from the stop part so as to guide the moving objects to the one-direction orbiting groove without restricting the relative rotation between the clutch drum and the clutch case in the one direction, multiple lead grooves that guide the moving objects from the other-direction orbiting groove to the stop part or the pass part when the clutch drum and the clutch case are relatively rotated in the one direction with the moving objects located in the other-direction orbiting groove, and a release groove that guides the moving objects from the stop part or the pass part to the one-direction orbiting groove when the clutch drum and the clutch case are relatively rotated in the other direction with the moving objects located on the stop part or the pass part.

Preferably, the guide groove includes a plurality of the stop parts and a plurality of the pass parts, and one of the pass parts forms a part of the return groove.

Preferably, when one moving object is located on any pass part or in a position that is in phase with the pass part, at least one moving object other than the one moving object is located on one stop part or in a position that is in phase with the one stop part.

Preferably, the stop parts or the pass parts are disposed on the guide groove at equal intervals, and the moving objects are away from each other by an integral multiple of one of the intervals.

Preferably, the guide groove is divided into a stop region in which a plurality of stop parts are disposed and a pass region in which multiple pass parts are disposed, and the single return groove is disposed in a position in the one direction in the pass region with respect to the single one-direction orbiting groove.

Preferably, the moving objects include two moving objects disposed on the guide groove at an interval of about 180°, approximately a half of a circumference of the guide groove is used as a stop region, approximately another half of the circumference of the guide groove is used as a pass region, and when one object is located on any pass part or in a position that is in phase with the pass part, the other moving object is located on any one stop part or in a position that is in phase with the one stop part.

Preferably, the guide groove is provided on an outer circumferential surface of the clutch drum, the moving objects are disposed between the guide groove and slide grooves axially provided in at least two positions on an inner circumferential surface of the clutch case, and the moving objects relatively move in the guide groove with rotation of the clutch drum while moving in the slide grooves.

Preferably, the guide groove is disposed on at least one end surface of the clutch drum.

The present invention also provides a shielding apparatus including the clutch apparatus, a rotor that is energized in one direction, and a shielding member that can be opened and closed with rotation of the rotor. The moving objects relatively move along the guide groove with rotation of the rotor.

### BRIEF DESCRIPTION OF DRAWINGS

Fig. 1 is a front view showing a roll screen which is a shielding apparatus according to a first embodiment of the present invention.
Fig. 2 is an exploded perspective view showing a clutch apparatus of the roll screen in Fig. 1.
Fig. 3A is an enlarged sectional view of a major part of the clutch apparatus of the roll screen in Fig. 1, and Fig. 3B is a sectional view taken along line A-A in Fig. 3A.
Fig. 4 is a development drawing of a guide groove of a clutch drum of the clutch apparatus in Fig. 3.
Figs. 5A to 5D are drawings showing the operation of the roll screen in Fig. 1.
Fig. 6 is a drawing showing a rotation allowable range α in which the rotation restriction of the clutch apparatus can be lifted.
Figs. 7A and 7B are drawings showing a modification where the guide groove of the clutch apparatus in Fig. 3 is provided on a clutch case, in which Fig. 7A is an enlarged sectional view of a major part; and Fig. 7B is a sectional view taken along line B-B in Fig. 7A.
Figs. 8A to 8C are drawings showing a double roll screen which is a shielding apparatus of a second embodiment of the present invention, in which Fig. 8A is a front view; Fig. 8B is a side view; and Fig. 8C is an enlarged sectional view showing the connection between a coil spring and a clutch apparatus.
Fig. 9 is a development drawing a guide groove according to a third embodiment of the present invention.
Fig. 10 is a development drawing a guide groove according to a fourth embodiment of the present invention.
Fig. 11 is a development drawing a guide groove according to a fifth embodiment of the present invention.
Fig. 12 is a development drawing a guide groove according to a sixth embodiment of the present invention.
Figs. 13A and 13B are drawings showing a horizontal blind which is a shielding apparatus according to a seventh embodiment of the present invention, in which Fig. 13A is a front view; and Fig. 13B is a sectional view taken along line C-C in Fig. 13A.
Fig. 14 is a front view showing a roll screen which is a shielding apparatus according to an eighth embodiment of the present invention.
Fig. 15 is a development drawing of guide grooves of two clutch apparatuses of the roll screen in Fig. 14.
Figs. 16A to 16C are drawings showing a curtain rail which is a shielding apparatus according to a ninth embodiment of the present invention, in which Fig. 16A is a front view (a hanger rail is a sectional view); Fig. 16B is a plan view; Fig. 16C is a side view.
Fig. 17 is an enlarged sectional view of a major part of a clutch apparatus of the curtain rail in Figs. 16A to 16C.
Fig. 18A is a perspective view showing a clutch drum of the clutch apparatus in Fig. 17, and Fig. 18B is an end surface view showing a guide groove of the clutch drum.
Figs. 19A and 19B are drawings showing a clutch apparatus according to a tenth embodiment of the present invention, in which Fig. 19A is an enlarged sectional view of a major part; and Fig. 19B is a sectional view taken along line D-D in Fig. 19A.
Fig. 20 is a development drawing of a guide groove of a clutch drum of the clutch apparatus in Fig. 19.

### DESCRIPTION OF EMBODIMENTS

Now, embodiments of the present invention will be described. Various features described in the embodiments below can be combined with each other.

### First Embodiment

### (1) Configuration

### (1-1) Overall Configuration of Roll Screen

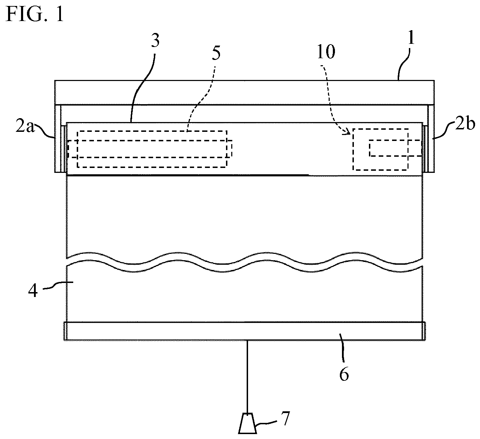

As shown in Fig. 1, a roll screen serving as a shielding apparatus is configured as follows: brackets 2a, 2b are mounted on both sides of a frame 1 fixed to, for example, the head of a window; a winding pipe 3 serving as a rotor is rotatably supported between the brackets 2a, 2b; and a screen 4 is suspended from and supported by the winding pipe 3.

A coil spring 5 serving as energizing means is disposed in the winding pipe 3. One end of the coil spring 5 is fixed to the bracket 2a with a fixed shaft 5a therebetween, and the other end thereof is coupled to the winding pipe 3. The coil spring 5 energizes the winding pipe 3 in the direction in which the unwound screen 4 is wound. When the screen 4 is unwound by pulling a weight bar 6 mounted on the lower end of the screen 4 or a pull cord 7 mounted on the weight bar 6, the winding pipe 3 rotates in an opposite direction, and the coil spring 5 stores energy.

Hereafter, the direction in which the members rotate when winding the screen 4 ("one direction" in Claims) is referred to as the energizing direction, and the direction in which the members rotate when unwinding the screen 4 is referred to as the energy storage direction ("the other direction" in Claims). The roll screen of the present embodiment is provided with a clutch apparatus 10 that allows the screen 4 to be suspended and supported in the desired position by restricting the rotation of the winding pipe 3 against the energizing force of the coil spring 5.

### (1-2) Clutch Apparatus

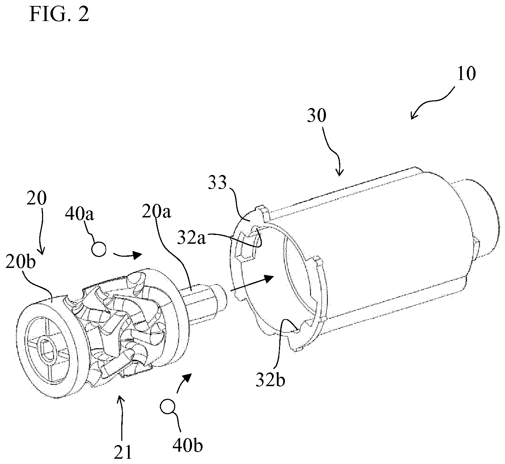

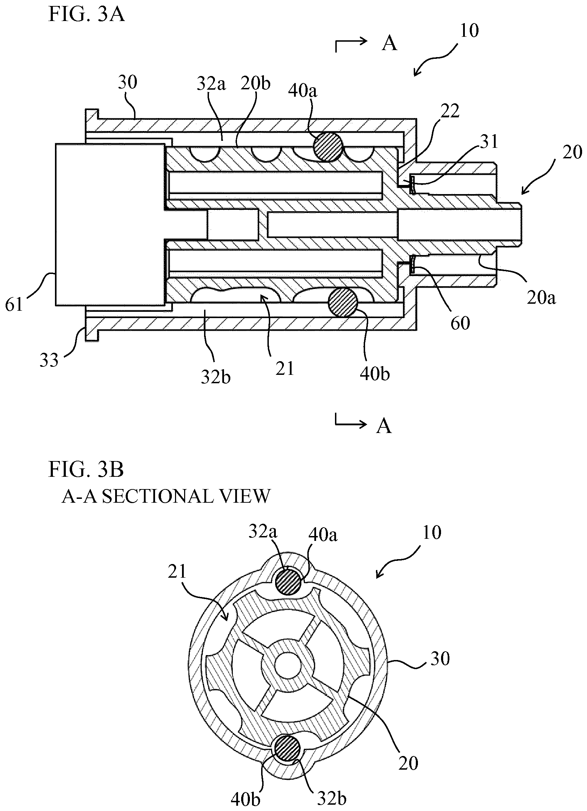

Next, the structure of the clutch apparatus 10 will be described in detail. As shown in Figs. 2 and 3A, the clutch apparatus 10 mainly includes a cylindrical clutch drum 20 whose base 20a is non-rotatably supported by the bracket 2b (see Fig. 1), a cylindrical clutch case 30 disposed around the perimeter of the clutch drum 20 and fixed to the winding pipe 3, and two clutch balls 40a, 40b serving as moving objects. These members are formed of, for example, a resin.

### Clutch Drum

The clutch drum 20 includes an end base 20a having a small diameter (the right portion of the clutch drum 20 in Fig. 3A) and a body 20b having a larger diameter than the end base 20a. The end base 20a and body 20b are formed integrally. The end base 20a is a polygonal shaft and is fitted and fixed to a bracket shaft (not shown) mounted on the bracket 2b. The body 20b has a circumferential endless guide groove 21 on the outer circumferential surface thereof. The configuration of the guide groove 21 will be described later.

### Clutch Case

As shown in Fig. 3A and Fig. 3B, which is an A-A sectional view, the clutch case 30 is relatively rotatably disposed on the outer circumferential surface of the clutch drum 20 and has a diameter slightly smaller than the inner diameter of the winding pipe 3. The clutch case 30 is inserted and fixed into the winding pipe 3 so as to rotate integrally with the winding pipe 3. The clutch case 30 has a small diameter part 31 having a smaller inner diameter and two slide grooves 32a, 32b on the inner circumference thereof. The slide grooves 32a, 32b are axially continuously formed from an end 33 of the clutch case 30 (the left end of the clutch case 30 in Fig. 3A) to the small diameter part 31.

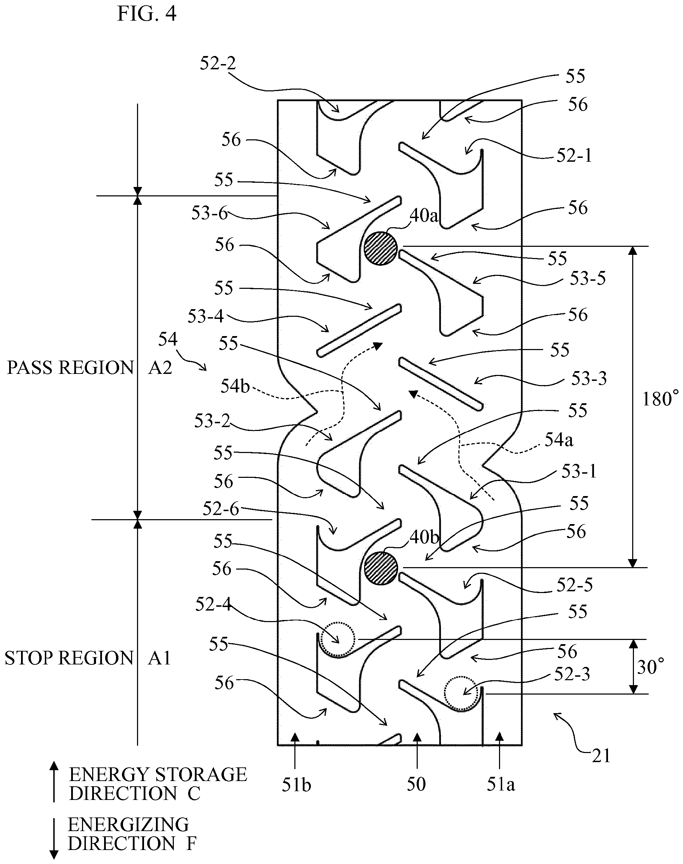

The slide grooves 32a, 32b are provided in positions that are symmetric with respect to the rotation axis, that is, in positions that are circumferentially away from each other by 180°. Disposed between the guide groove 21 of the clutch drum 20 and the slide grooves 32a, 32b of the clutch case 30 are clutch balls 40a, 40b as moving objects. The two clutch balls 40a, 40b can slide in the axial direction (in the left-right direction in Fig. 3A). When the clutch case 30 rotates with the rotation of the winding pipe 3, the clutch balls 40a, 40b move along the guide groove 21 while sliding in the slide grooves 32a, 32b. Due to this configuration, the clutch balls 40a, 40b are always away from each other by 180° on the guide groove 21 (see Fig. 4).

The clutch drum 20 is mounted on the clutch case 30 by inserting the end base 20a of the clutch drum 20 into the clutch case 30 from the end 33 of the clutch case 30 and bringing a step 22 between the end base 20a and body 20b into contact with the small diameter part 31 of the clutch case 30. Also, a snap ring 60 is inserted from the end base 20a of the clutch drum 20 and fitted thereto so as to come into contact with the small diameter part 31, preventing the clutch drum 20 and clutch case 30 from relatively moving in the axial direction (in the left-right direction in Fig. 3A). Also, a governor apparatus 61 for properly reducing the winding speed of the screen 4 is disposed on the end 33 of the clutch case 30. The governor apparatus 61 also prevents the clutch drum 20 from descending from the clutch case 30.

Since the slide grooves 32a, 32b are continuously formed so as to reach the end 33 of the clutch case 30, the clutch balls 40a, 40b can be easily introduced when assembling the clutch apparatus 10.

### Guide Groove

Next, the configuration of the guide groove 21 will be described with reference to a development drawing shown in Fig. 4. When the screen 4 (see Fig. 1) is wound, the two clutch balls 40a, 40b move in the downward direction of Fig. 4 relative to the guide groove 21; when the screen 4 is unwound, the clutch balls 40a, 40b move in the upward direction of Fig. 4 relative to the guide groove 21.

Hereafter, the downward direction of Fig. 4 is referred to as an energizing direction F. The reason is that because when winding the screen 4, the clutch balls 40a, 40b are energized through the energized clutch case 30 (winding pipe 3) and thus move the downward direction of Fig. 4. Also, the upward direction of Fig. 4 is referred to as an energy storage direction C. The reason is that when unwinding the screen, the clutch balls 40a, 40b move in the upward direction of Fig. 4 and the energizing force is stored in the coil spring 5. Also, the upstream side and downstream side in the energizing direction F in the guide groove 21 are simply referred to as the upstream side and downstream side, respectively.

### Orbiting Groove

An annular energy-storage-direction orbiting groove 50 is circumferentially formed in the central portion of the guide groove 21. The energy-storage-direction orbiting groove 50 is a groove in which the clutch balls 40a, 40b orbit in the energy storage direction C when the clutch drum 20 and clutch case 30 are relatively rotated in the energy storage direction, that is, when the clutch case 30 is rotated in the energy storage direction relative to the clutch drum 20. An annular right energizing-direction orbiting groove 51a and an annular left energizing-direction orbiting groove 51b are circumferentially formed on both sides of the energy-storage-direction orbiting groove 50. The right energizing-direction orbiting groove 51a and left energizing-direction orbiting groove 51b are grooves in which the clutch balls 40a, 40b orbit when the clutch drum 20 and clutch case 30 are relatively rotated in the energizing direction, that is, when the clutch case 30 is rotated in the energizing direction relative to the clutch drum 20.

### Stop Part and Pass Part

Six stop parts 52 and six pass parts 53 are disposed between the energy-storage-direction orbiting groove 50 and the left and right energizing-direction orbiting grooves 51a, 51b every 30° (see Fig. 4) at equal intervals. The stop parts 52 restrict orbiting of the clutch balls 40a, 40b in the energizing direction F. The pass parts 53 do not restrict orbiting of the clutch balls 40a, 40b in the energizing direction F but guide the clutch balls 40a, 40b to the energizing-direction orbiting grooves 51a, 51b. More specifically, the six stop parts 52 are disposed alternately between the energy-storage-direction orbiting groove 50 and right energizing-direction orbiting groove 51a and between the energy-storage-direction orbiting groove 50 and left energizing-direction orbiting groove 51b in approximately a half of the circumference of the guide groove 21, that is, in a range of approximately 180°, forming a stop region A1. Similarly, the pass parts 53 are disposed alternately in a range of another approximately 180°, forming a pass region A2.

Hereafter, the stop parts 52 in the stop region A1 are referred to as stop parts 52-1 to 52-6 sequentially from that on the most downstream side, that is, that on the most downstream side in the energizing direction F. Similarly, the pass parts 53 in the pass region A2 are referred to as pass parts 53-1 to 53-6 sequentially from that on the most downstream side. Due to this arrangement, when one clutch ball 40a (40b) is located on any pass part 53-x or in a position which is in phase with the pass part 53-x, the other clutch ball 40b (40a) is located on a stop part 52-x which is away from the pass part 53-x by 180° or in a position which is in phase with the stop part 52-x. As used herein, the term "a position which is in phase with the pass part 53-x" refers to a position whose angle (the height in Fig. 4) with respect to the reference position of the guide groove 21 (e.g., the lower end of Fig. 4) is equal to that of the pass part 53-x.

### Return Groove, Lead Groove, Release Groove

The guide groove 21 includes return grooves 54 that each guide the clutch ball 40a or 40b from the energizing-direction orbiting grooves 51a or 51b to the energy-storage-direction orbiting groove 50, lead grooves 55 that each lead the clutch ball 40a or 40b from the energy-storage-direction orbiting groove 50 to a stop part 52 or pass part 53, and release grooves 56 that each guide the clutch ball 40a or 40b from a stop part 52 or pass part 53 to the energizing-direction orbiting groove 51a or 51b.

The return grooves 54 consists of two return grooves: a return groove 54a that guides a clutch ball from the right energizing-direction orbiting groove 51a to the energy-storage-direction orbiting groove 50 and a return groove 54b that guides a clutch ball from the left energizing-direction orbiting groove 51b to the energy-storage-direction orbiting groove 50. The return grooves 54 are provided on the downstream side (in positions in the energizing direction F) in the pass region A2. More specifically, the return groove 54a is provided between the pass part 53-1 and pass part 53-3, and the return groove 54b is provided between the pass part 53-2 and pass part 53-4. The pass parts 53-1, 53-2 form parts of the return grooves 54a, 54b, respectively. When the clutch case 30 is rotated in the energy storage direction relative to the clutch drum 20, the return groove 54a or 54b guides the clutch ball 40a or 40b located in the energizing-direction orbiting groove 51a or 51b to the energy-storage-direction orbiting groove 50.

The lead grooves 55 consist of a total of 12 lead grooves that are provided on the upstream side of the stop parts 52 and pass parts 53 (in positions in the energy storage direction C). When the clutch case 30 is rotated in the energizing direction relative to the clutch drum 20, a lead groove 55 leads the clutch ball 40a or 40b located in the energy-storage-direction orbiting groove 50 to a stop part 52 or pass part 53.

The release grooves 56 consist of a total of 10 release grooves that are provided on the upstream side (in positions in the energy storage direction C) of the stop parts 52 and the pass parts 53 (53-3 to 53-6) except for the pass parts 53-1, 53-2. When the clutch case 30 is rotated in the energy storage direction relative to the clutch drum 20, a release groove 56 guides the clutch ball 40a or 40b located on a stop part 52 or pass part 53 to the energizing-direction orbiting groove 51a or 51b.

### (2) Operation

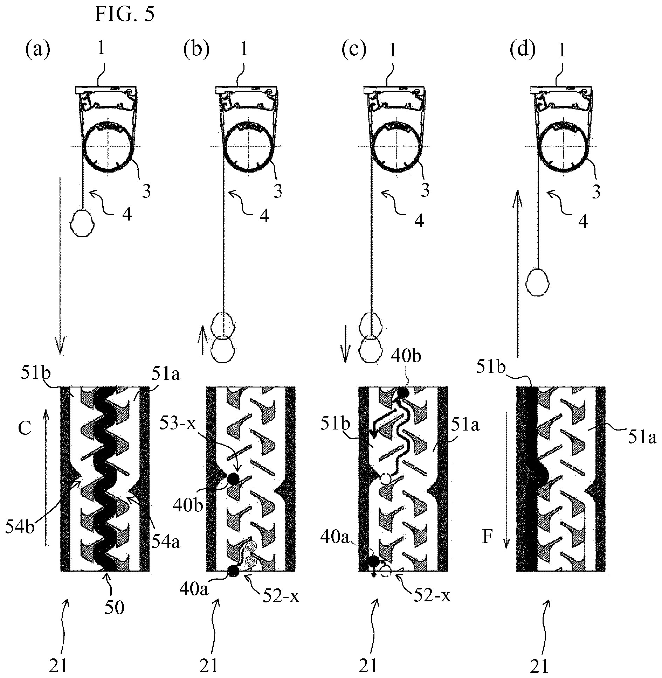

Next, the operation of the roll screen including the clutch apparatus 10 thus configured will be described with reference to Figs. 5A to 5D.

### (2-1) Unwinding

By unwinding the screen 4 of the roll screen against the energizing force of the coil spring 5 (see Fig. 1), the clutch case 30 is rotated through the winding pipe 3. At this time, the clutch balls 40a, 40b orbit in the energy-storage-direction orbiting groove 50 in the energy storage direction C (see Fig. 5A). If the clutch balls 40a, 40b are located in the energizing-direction orbiting groove 51a or 51b, they are guided to the energy-storage-direction orbiting groove 50 by the return grooves 54a, 54b and then orbit.

### (2-2) Stopping Unwinding

By unwinding the screen 4 until it reaches a predetermined position and then releasing it, the screen 4 is slightly wound by the energizing force of the coil spring 5 and then the winding is stopped. Specifically, by releasing the screen 4, the clutch balls 40a, 40b, which have orbited in the energy-storage-direction orbiting groove 50 during unwinding of the screen 4, move in the energy-storage-direction orbiting groove 50 in the energizing direction F. Then, one clutch ball 40a is guided to any stop part 52-x by a lead groove 55, and the other clutch ball 40b is guided to a corresponding pass part 53-x by a lead groove 55 (see Fig. 5B).

In this state, the rotation of the winding pipe 3 and clutch case 30 in the screen winding direction by the energizing force of coil spring 5 is restricted by the clutch drum 20 through the clutch ball 40a stopped by the stop part 52-x. Thus, the winding of the screen 4 is restricted.

In this case, the clutch ball 40a or clutch ball 40b is guided to one of the stop parts 52-1 to 52-6 before the winding pipe 3 is rotated by up to about 50°, since the stop parts 52-1 to 52-6 are provided every 30° in the stop region A1 extending over 180°. Thus, after releasing the screen 4, the clutch case 30 is rotated by a smaller return angle and then the rotation is restricted. That is, a smaller amount of screen 4 is wound and then the winding is stopped. As a result, the screen 4 can be easily suspended and supported in the desired position.

### (2-3) Winding

By slightly unwinding the screen 4 in the winding stop state, the clutch ball 40a and clutch ball 40b are guided from the stop part 52-x and pass part 53-x through release grooves 56 to the right energizing-direction orbiting groove 51a or left energizing-direction orbiting groove 51b (see Fig. 5C).

Then, by releasing the screen 4 with the clutch balls 40a, 40b in the energizing-direction orbiting groove 51a or 51b, the clutch balls 40a, 40b is allowed to orbit in the energizing direction circumferential groove 51a or 51b in the energizing direction F. Thus, the rotation restriction of the clutch apparatus 10 is lifted, and the screen 4 is wound by the energizing force of the coil spring 5 (see Fig. 5D).

If the screen 4 is unwound to a greater extent than necessary in lifting the rotation restriction of the clutch apparatus 10, the clutch ball 40a (40b) may be temporarily guided to the energizing-direction orbiting groove 51a or 51b through a release groove 56 and then again guided to the energy-storage-direction orbiting groove 50 through a return groove 54. Then, even if the screen 4 is released, the clutch ball 40a (40b) may be stopped by a stop part 52 again.

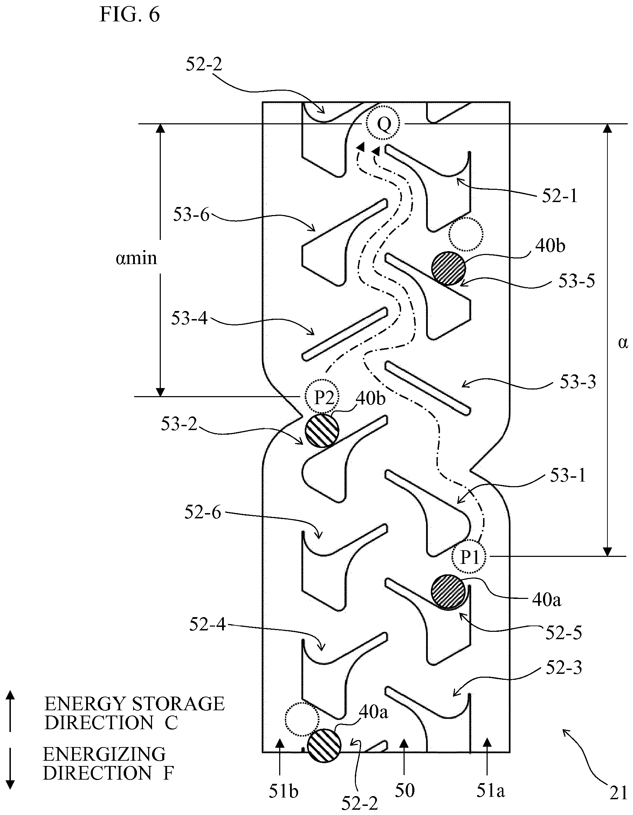

However, the present embodiment is configured such that the return grooves 54 are provided in the number corresponding to the number of energizing-direction orbiting grooves; the pass region A2 without stop parts 42 is provided on the guide groove 21; and the return grooves 54 are provided on the downstream side in the pass region A2. Thus, as shown in Fig. 6, the rotation allowable range α in which the winding pipe 3 (clutch case 30) can be rotated to lift the rotation restriction of the clutch apparatus 10 to wind the screen 4 can be set to more than 180°.

Specifically, as shown in Fig. 6, by slightly unwinding the screen 4 so that the clutch ball 40a (40b), which has been in the stop region A1, is guided to the area between a position (position P1) in the right energizing-direction orbiting groove 51 a or left energizing-direction orbiting groove 51b through a release groove 56, then moves in the energy-storage-direction orbiting groove 50 in the energy storage direction C through a return groove 54 and a position (position Q) immediately before being guided to a more upstream side than the stop part 52-1 located on the most downstream side in the stop region A1, then, the clutch balls 40a, 40b can orbit in the energizing-direction orbiting groove.

When one clutch ball 40a is located on the stop part 52-1 or 52-2, the other clutch ball 40b is located on the pass part 53-1 or 53-2. In this case, by releasing the screen 4 with the clutch ball 40b guided from the position P2 to which the clutch ball 40b has moved when the clutch ball 40a is guided to the right energizing-direction orbiting groove 51a or left energizing-direction orbiting groove 51b through a release groove 56, to a position (position Q) immediately before it is guided to a more upstream side than the stop part 52-1, the rotation restriction of the clutch apparatus 10 can be lifted (see the clutch balls 40a, 40b on the left side of Fig. 6). Even in this case, a rotation allowable range amin of about 170° can be obtained.

### (3) Effects

The roll screen thus configured can show the following effects.
(i) The two clutch balls 40a, 40b are disposed at an interval of 180°, and the six stop parts 52 are disposed in about half of the circumference of the guide groove 21 at equal intervals. Thus, after unwinding the screen 4 until it reaches the desired position and then releasing it, the winding pipe 3 is rotated by a smaller return angle and then the rotation thereof is restricted and the winding of the screen 4 is stopped. As a result, the screen 4 is easily suspended and supported in the desired position.
(ii) The return grooves 54 are provided in the number corresponding to the number of energizing-direction orbiting grooves 51; the pass region A2 without stop parts 42 is provided on the guide groove 21; and the return grooves 54 are provided on the downstream side in the pass region A2. Thus, the clutch ball 40a (40b) travels a greater distance before guided to the stop part 52-1 on the most downstream side in the stop region A1 subsequent to moving in the energy-storage-direction orbiting groove 50 in the energy storage direction C through the return groove 54. Thus, a sufficient range can be obtained as the rotation allowable range α of the winding pipe 3 when unwinding the screen 4 so that the screen 4 whose winding is restricted can be wound, making it easy to wind the screen 4.

The present invention may be carried out in the following aspects.

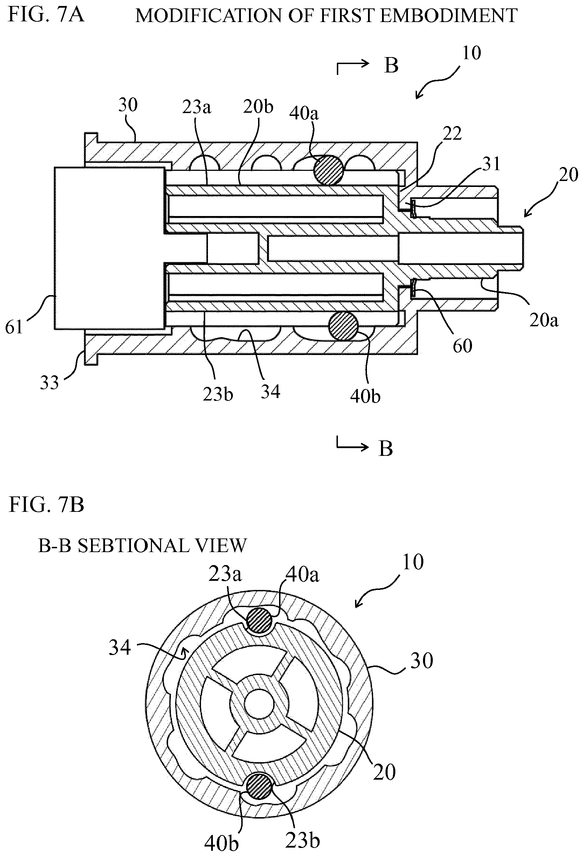

In the above embodiment, as shown in Fig. 3, the guide groove 21 is provided on the clutch drum 20, and the slide grooves 32a, 32b are provided on the clutch case 30. However, as shown in Figs. 7A and 7B, a guide 34 may be provided on the inner surface of the clutch case 30, and slide grooves 23a, 23b may be provided on the outer circumferential surface of the clutch drum 20. In this case, it is preferred to shape the guide 34 so that a development drawing thereof becomes the same as that of the above embodiment and to dispose two clutch balls 40a, 40b at an interval of 180°, as in the above embodiment. This configuration also can produce effects similar to those of the above embodiment.

While, in the above embodiment, the moving objects are the clutch balls 40a, 40b, the moving objects need not be spherical. The moving objects may have other shapes such as a cylindrical shape as long as they can move (slide) along the guide groove 21 while sliding in the slide grooves 32a, 32b.

### Second Embodiment

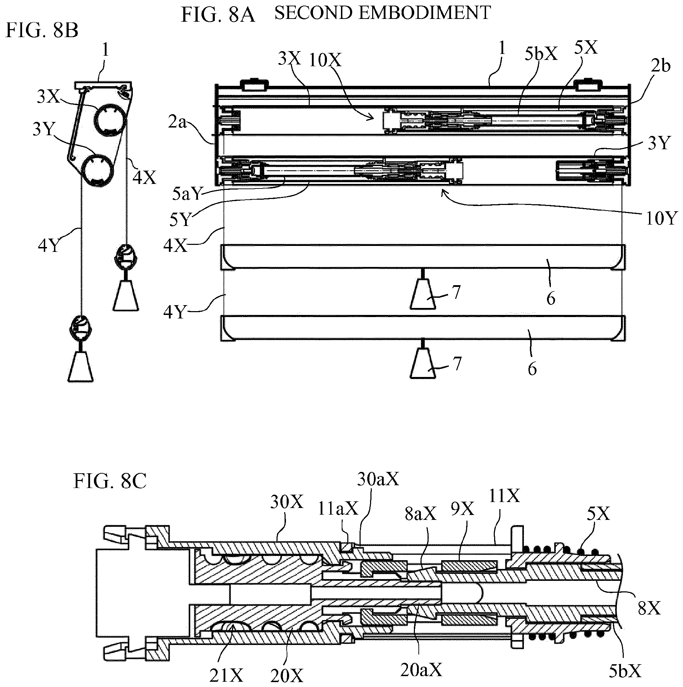

Figs. 8A to 8C show a double roll screen which is a shielding apparatus according to a second embodiment. The double roll screen of the present embodiment is configured such that a clutch apparatus 10 that is approximately similar to that of the first embodiment is provided in each of two winding pipes 3X, 3Y. Elements other than the clutch apparatuses 10 are, for example, known elements as disclosed in International Publication No. 2013/005524 pamphlet.

Referring to Fig. 8A, the double roll screen of the present embodiment is outlined as follows: brackets 2a, 2b are mounted on both sides of one frame 1; two winding pipes 3X, 3Y are rotatably supported between the brackets 2a, 2b, and screens 4X, 4Y are suspended from and supported by the winding pipes 3X, 3Y; coil springs 5X, 5Y serving as energizing means are disposed in the winding pipes 3X, 3Y; one end of the coil spring 5X is fixed to the bracket 2b through a fixed shaft 5bX, and the other end thereof is coupled to the winding pipe 3X; one end of the coil spring 5Y is fixed to the bracket 2a through a fixed shaft 5aY, and the other end thereof is coupled to the winding pipe 3Y; and the coil springs 5X, 5Y energize the winding pipes 3X, 3Y in the direction in which the unwound screens 4X, 4Y are wound. Note that when winding the screens 4X, 4Y, the winding pipes 3X, 3Y rotate in opposite directions, as shown in Fig. 8B.

A clutch apparatus 10X is provided on the side remote from the bracket 2b, of the fixed shaft 5bX, and a clutch apparatus 10Y is provided on the side remote from the bracket 2a, of the fixed shaft 5aY. The clutch apparatus 10X and clutch apparatus 10Y have the same configuration except that these apparatuses are mounted on the fixed shafts 5bX, 5aY in different directions. For this reason, the clutch apparatus 10X and the mounting structure of the clutch apparatus 10X and coil spring 5X will be described with reference to Fig. 8C.

The clutch apparatus 10X includes a clutch drum 20X and clutch case 30X similar to those of the first embodiment, and two clutch balls (not shown) are disposed between the clutch drum 20X and clutch case 30X. A polygonal shaft-shaped base 20aX close to the bracket 2b, of the clutch drum 20X is inserted in the front end 8aX of a support tube 8X non-rotatably coupled to the fixed shaft 5bX and is non-rotatably supported through a coupling tube 9X. On the other hand, the clutch case 30X is mounted on a drive plug 11X that is fitted to the inner circumferential surface of the winding pipe 3X (see Fig. 8A) and rotates integrally with the winding pipe 3X. In this case, a rib 11aX disposed on an end close to the bracket 2a, of the drive plug 11X and an engagement protrusion 30aX that is disposed on a side close to the bracket 2b, of the clutch case 30X and protrudes circumferentially outwardly are engaged with each other. The side close to the bracket 2a, of the coil spring 5X is wound around the drive plug 11X. Thus, the energizing force of the coil spring 5X is transmitted to the clutch case 30X and winding pipe 3X through the drive plug 11X.

In the present embodiment, the clutch apparatuses 10X, 10Y having the same configuration are disposed in the two winding pipes 3X, 3Y, respectively. Thus, the commonality of components can be increased. Also, the clutch apparatuses 10X, 10Y may be the same as that used in the roll screen of the first embodiment.

### Third Embodiment

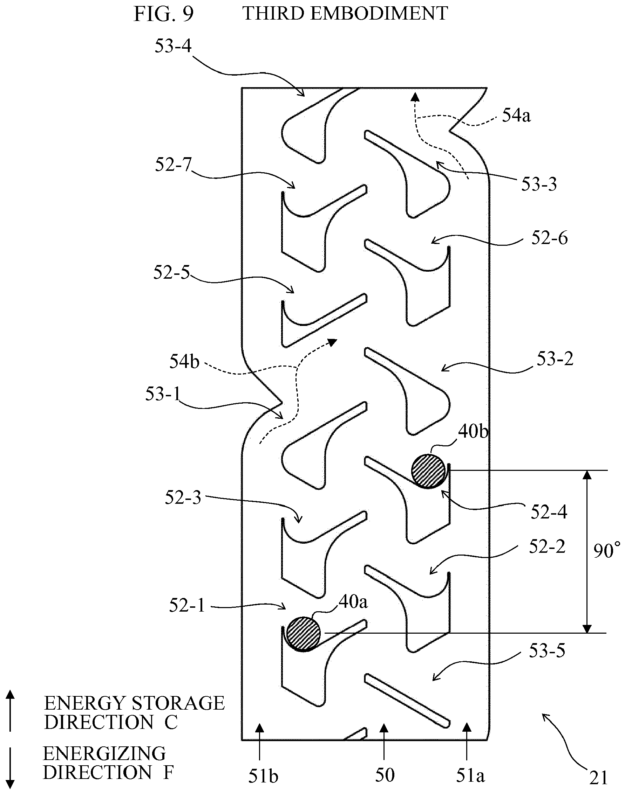

Fig. 9 shows a development drawing of a guide groove 21 of a clutch apparatus 10 according to a third embodiment. The clutch apparatus 10 of the third embodiment differs from that of the first embodiment in only the configuration of a guide groove 21 and the circumferential interval (phase difference) between slide grooves 32a, 32b and two clutch balls 40a, 40b. These differences alone will be described below.

The guide groove 21 of the clutch apparatus 10 of the present embodiment includes seven stop parts 52 and five pass parts 53. Four stop parts 52-1 to 52-4, two pass parts 53-1, 53-2, three stop parts 52-5 to 52-7, and three pass parts 53-3 to 53-5 are disposed in this order alternately in the left-right direction at equal intervals. A return groove 54a is provided between the pass part 53-3 and pass part 53-5, and a return groove 54b is provided between the pass part 53-1 and stop part 52-5. Slide grooves 32a, 32b and two clutch balls 40a, 40b are provided in positions circumferentially away from each other by 90° (see Fig. 9).

In this configuration also, when one clutch ball 40a is located on any pass part 53 or in a position which is in phase with the pass part 53, the other clutch ball 40b is located on one stop part 52 or in a position which is in phase with the stop part 52. Thus, when unwinding the screen 4 until it reaches a predetermined position and then releasing it, a winding pipe is rotated by a smaller return angle and then the winding of the screen 4 is reliably restricted.

### Fourth Embodiment

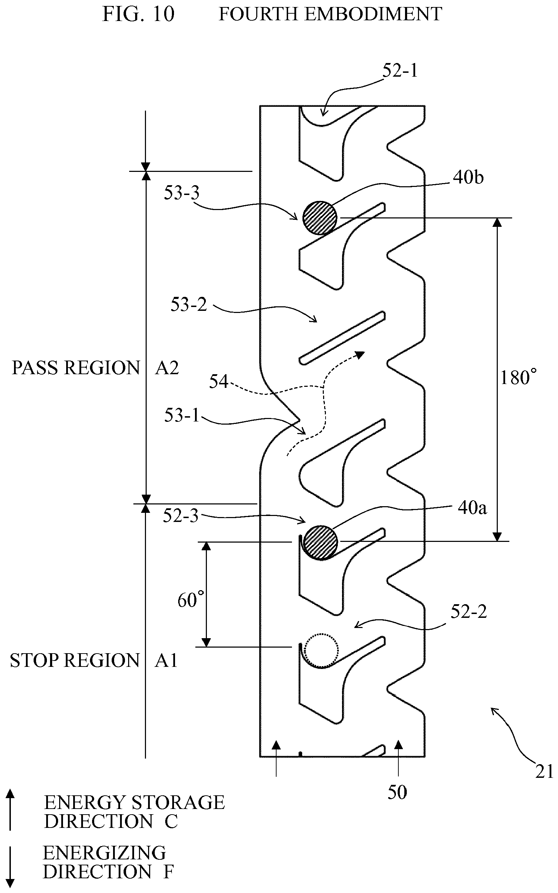

Fig. 10 shows a development drawing of a guide groove 21 of a clutch apparatus 10 according to a fourth embodiment. The clutch apparatus 10 of the fourth embodiment differs from that of the first embodiment in only the configuration of the guide groove 21. This difference alone will be described below.

The guide groove 21 of the clutch apparatus 10 of the present embodiment includes a single energy-storage-direction orbiting groove 50 and a single energizing-direction orbiting groove 51. Three stop parts 52-1 to 52-3 and three pass parts 53-1 to 53-3 are disposed in this order at equal intervals (at intervals of 60°, see Fig. 10). A return groove 54 is provided between the pass part 53-1 and pass part 53-2, that is, on the downstream side in a pass region A2.

In this configuration also, as in the first embodiment, when unwinding a screen 4 until it reaches a predetermined position and then releasing it, a winding pipe is rotated by a smaller return angle and then the winding of the screen 4 is reliably restricted.

Also, as in the first embodiment, clutch ball 40a (40b) travels a greater distance by moving in the energy-storage-direction orbiting groove 50 in the energy storage direction C through the return groove 54 and then being guided to a more upstream side than the stop part 52-1. Thus, a greater range can be obtained as the rotation allowable range α of a winding pipe 3 when unwinding the screen 4 so that the screen 4 whose winding is restricted can be wound.

### Fifth Embodiment

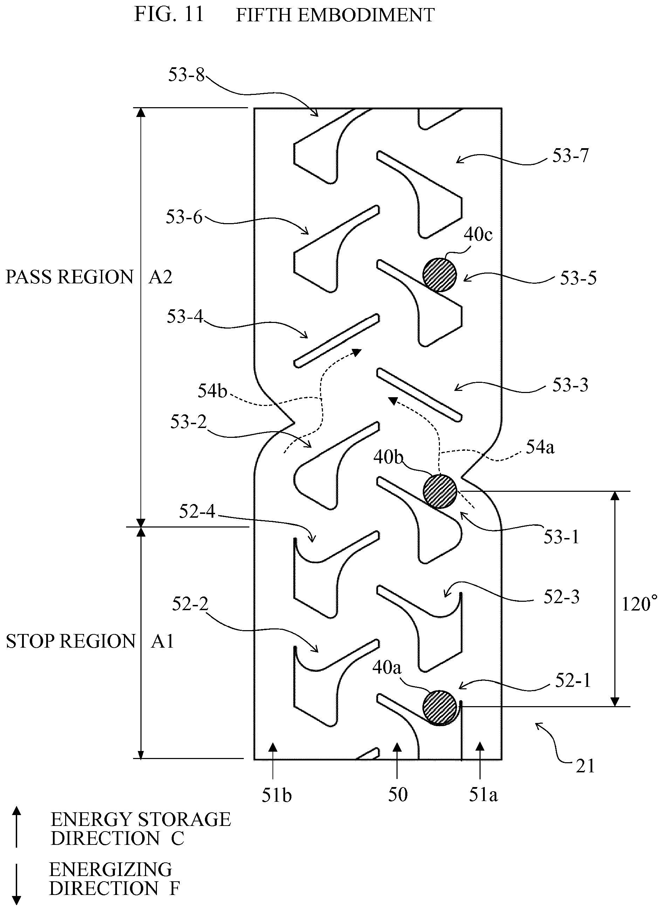

Fig. 11 shows a development drawing of a guide groove 21 of a clutch apparatus 10 according to a fifth embodiment. The clutch apparatus 10 of the fifth embodiment differs from that of the first embodiment in only the configuration of the guide groove 21 and the number of clutch balls 40. These differences alone will be described below.

The guide groove 21 of the clutch apparatus 10 of the present embodiment includes four stop parts 52-1 to 52-4 and eight pass parts 53-1 to 53-8 that are disposed in this order alternately in the left-right direction at equal intervals. A range of 120° and a range of the other 240° in the entire circumference of the guide groove 21 are referred to as a stop region A1 and a pass region A2, respectively. A return groove 54a is provided between the pass part 53-1 and pass part 53-3, and a return groove 54b is provided between the pass part 53-2 and pass part 53-4. Three clutch balls 40a, 40b, 40c are disposed in positions away from each other by 120° (see Fig. 11) at equal intervals.

In this configuration also, as in the first embodiment, when unwinding a screen 4 until it reaches a predetermined position and then releasing it, a winding pipe is rotated by a smaller return angle and then the winding of the screen 4 is reliably restricted.

Also, the pass region A2 of the present embodiment is greater than that of the first embodiment. Thus, the clutch ball 40a (40b, 40c) travels an even greater distance by moving in an energy-storage-direction orbiting groove 50 in the energy storage direction C through a return groove 54 and then being guided to a more upstream side than the stop part 52-1. Thus, an even greater range than that of the first embodiment can be obtained as the rotation allowable range α of a winding pipe 3 when unwinding the screen 4 so that the screen 4 whose winding is restricted can be wound.

### Sixth Embodiment

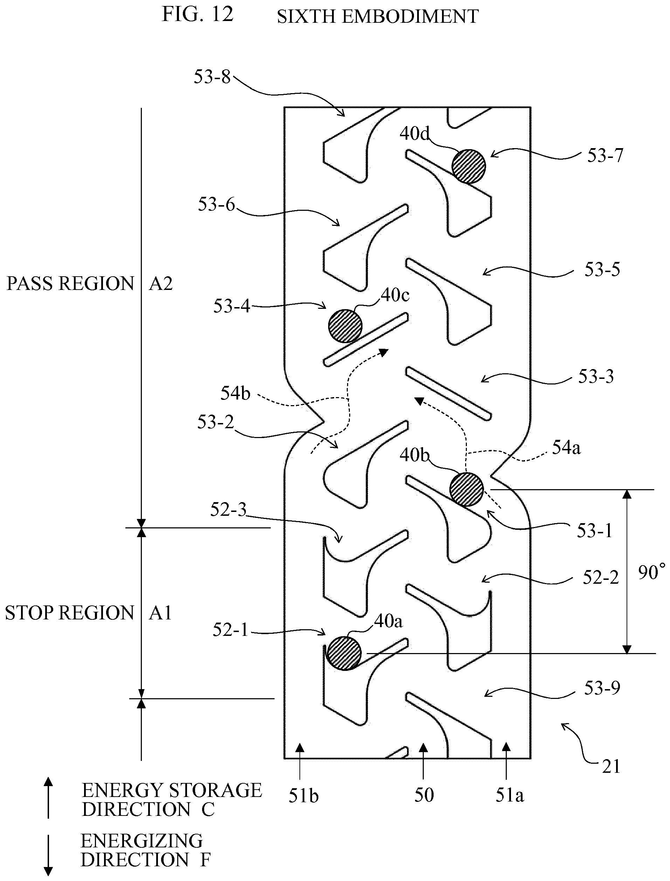

Fig. 12 shows a development drawing of a guide groove 21 of a clutch apparatus 10 according to a sixth embodiment. The clutch apparatus 10 of the sixth embodiment differs from that of the first embodiment in only the configuration of the guide groove 21 and the number of clutch balls 40. These differences alone will be described below.

The guide groove 21 of the clutch apparatus 10 of the present embodiment includes three stop parts 52-1 to 52-3 and nine pass parts 53-1 to 53-9 that are disposed in this order alternately in the left-right direction at equal intervals. A range of 90° and a range of the other 270° in the entire circumference of the guide groove 21 are referred to as a stop region A1 and a pass region A2, respectively. A return groove 54a is provided between the pass part 53-1 and pass part 53-3, and a return groove 54b is provided between the pass part 53-2 and pass part 53-4. Four clutch balls 40a, 40b, 40c, 40d are disposed in positions away from each other by 90° at equal intervals.

In this configuration also, as in the first embodiment, when unwinding a screen 4 until it reaches a predetermined position and then releasing it, a winding pipe is rotated by a smaller return angle and then the winding of the screen 4 is reliably restricted.

Also, the pass region A2 of the present embodiment is even greater than that of the fifth embodiment. Thus, the clutch ball 40a (40b, 40c, 40d) travels an even greater distance by moving in an energy-storage-direction orbiting groove 50 in the energy storage direction C through the return groove 54a or 54b and then being guided to a more upstream side than the stop part 52-1. Thus, an even greater range than that of the fifth embodiment can be obtained as the rotation allowable range α of a winding pipe 3 when unwinding the screen 4 so that the screen 4 whose winding is restricted can be wound.

To obtain a greater range as the rotation allowable range α of the winding pipe 3 when unwinding the screen 4 so that the screen 4 whose winding is restricted can be wound, it is desirable to minimize the number of stop parts 52. In the case of a configuration where the guide groove 21 is divided into the stop region A1 and pass region A2, it is preferred to narrow the stop region A1 in the guide groove 21 as much as possible.

On the other hand, in the case of a configuration where the guide groove 21 is divided into the stop region A1 and pass region A2, in order to reliably restrict the winding of the screen 4 when unwinding the screen 4 until it reaches a predetermined position and then releasing it, any clutch ball 40 that orbits in the energy-storage-direction orbiting groove 50 in the energy storage direction C has to be present in the stop region A1 (or in a slightly more upstream side position than the stop region A1). Specifically, if the clutch balls 40 are disposed at equal intervals and the number of clutch balls 40 is M, the stop region A1 has to be present in a range wider than 1/M of the entire circumference of the guide groove 21.

In this respect, in the first and fourth to sixth embodiments, the stop parts 52 and pass parts 53 are disposed at equal intervals over the entire circumference of the guide groove 21, and an equation S×M=N is satisfied where N represents the total number of stop parts 52 and pass parts 53; S represents the number of stop parts 52; and M represents the number of clutch balls 40. That is, the stop region A1 is formed in a range of S/N=1 /M of the entire circumference of the guide groove 21.

Thus, in these embodiments, when unwinding the screen 4 and then releasing it, the winding is reliably restricted. Also, the stop region A1 is minimized, and the pass region A2 is maximized.

Note that the clutch apparatus 10 of the present invention may be configured without satisfying the above equation. Also, as in the second embodiment, there may be used a configuration in which the guide groove 21 is not divided into a stop region A1 and a pass region A2, as a matter of course.

### Seventh Embodiment

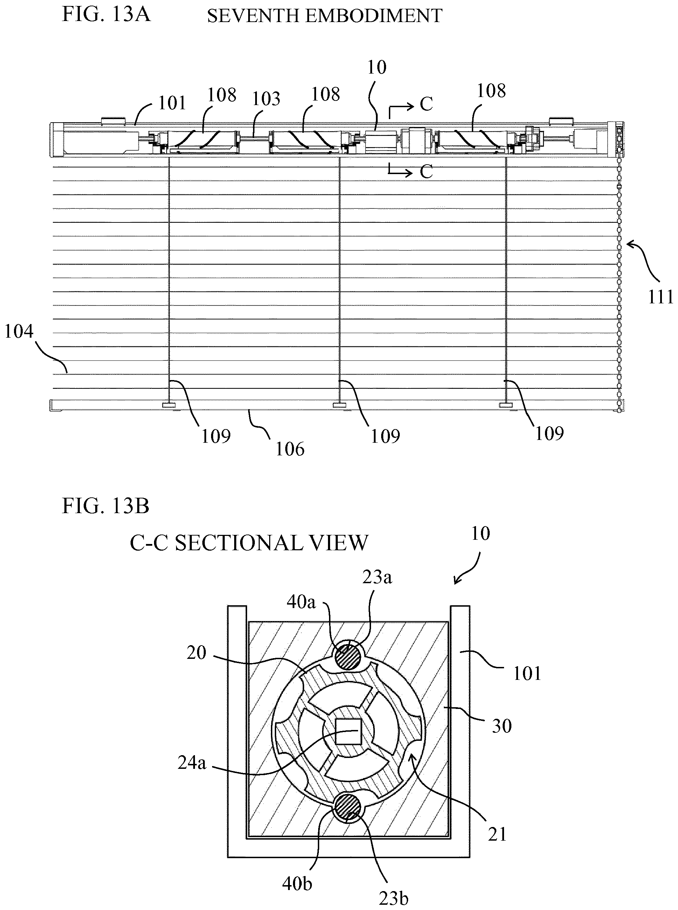

Figs. 13A and 13B are drawings showing a horizontal blind which is a shielding apparatus according to a seventh embodiment, in which Fig. 13A is a front view; and Fig. 13B is a sectional view taken along line C-C in Fig. 13A. The horizontal blind of the present embodiment includes a head box 101 and multiple slats 104 that are shielding members. The slats 104 and a bottom rail 106 are supported by multiple ladder cords (not shown) hanging from the head box 101.

Multiple hoisting cords 109 are hanging from the head box 101. The upper ends of the hoisting cords 109 are wound about winding cones 108 disposed in the head box 101, and the lower ends thereof are connected to the bottom rail 106. The winding cones 108 are mounted on a winding shaft 103 disposed in the head box 101. When the winding shaft 103 is rotated by operating an endless loop-shaped hoisting operation cord 107, the winding cones 108 are rotated in conjunction with the winding shaft 103. Due to the rotation of the winding cones 108, the hoisting cords 109 are wound or unwound, and the slats are raised or lowered.

The horizontal blind of the present embodiment also includes a clutch apparatus 10 that selectively switches between the restriction of rotation of the winding shaft 103 in the unwinding direction and the lift of the restriction. By using the clutch apparatus 10, it is possible to switch between a state in which the slats 104 and bottom rail 106 descend by self-weight and a state in which the self-weight descent is restricted.

The clutch apparatus 10 of the present embodiment mainly differs from that of the first embodiment in that a clutch drum 20 has a through hole 24 into which the winding shaft 103 can be relatively non-rotatably inserted and that the outer surface of a clutch case 30 is in the shape of a rectangular parallelepiped that is relatively non-rotatably fixed to the head box 101. That is, in the present embodiment, the clutch case 30 does not rotate, and the clutch drum 20 rotates with rotation of the winding shaft 103. Clutch balls 40a, 40b only axially move in slide grooves 23a, 23b of the clutch case 30 along the guide groove 21 with rotation of the clutch drum 20. In the following description, however, it is assumed that the clutch balls 40a, 40b relatively move in the guide groove 21.

On the other hand, the configuration of the guide groove 21 provided on the clutch drum 20, the relationship between the clutch drum 20 and clutch case 30, and the like are similar to those of the first embodiment. For this reason, the operation of the clutch apparatus 10 will be mainly described with reference to Figs. 13A and 13B and the development drawing of the guide groove 21 in Fig. 4.

In the present embodiment, the clutch drum 20 is attached to the headbox 101 in the direction in which the clutch balls 40 move in the energizing direction F in Fig. 4 when the slats 104 descend by self-weight. That is, the winding shaft 103 corresponds to a "rotor" in Claims, and energizing the winding shaft 103 in the unwinding direction by the self-weight of the slats 104 and bottom rail 106, which are shielding members, corresponds to "energize" in Claims.

### Winding

First, the slats 104 of the horizontal blind are wound against the energizing force based on the self-weight by operating the hoisting operation cord 107. Thus, the clutch drum 20 is rotated through the winding shaft 103. At this time, the clutch balls 40a, 40b orbit in the energy-storage-direction orbiting groove 50 in the energy storage direction C (see Fig. 4). If the clutch balls 40a, 40b are located in the energizing-direction orbiting groove 51a or 51b, they are guided to the energy-storage-direction orbiting groove 50 by the return grooves 54a, 54b and then orbit.

### Stopping Winding

By winding the slats 104 until they reach a predetermined position and then releasing the hoisting operation cord 107, the slats 104 slightly descend by self-weight and then the self-weight descent stops. Specifically, by releasing the hoisting operation cord 107, the clutch balls 40a, 40b, which have orbited in the energy-storage-direction orbiting groove 50 during winding of the slats 104, move in the energy-storage-direction orbiting groove 50 in the energizing direction F. Then, one clutch ball 40a is guided to any stop part 52-x by a lead groove 55, and the other clutch ball 40b is guided to a corresponding pass part 53-x by a lead groove 55.

In this state, the rotation of the clutch drum 20 in the unwinding direction is restricted by the clutch case 30 through the clutch ball 40a stopped by the stop part 52-x. Thus, the self-weight descent of the slats 104 is restricted.

### Unwinding (Self-Weight Descent)

By slightly operating the hoisting operation cord 107 in the winding direction in the self-weight descent restriction state, the clutch ball 40a and clutch ball 40b are guided from the stop part 52-x and pass part 53-x through release grooves 56 to the right energizing-direction orbiting groove 51a or left energizing-direction orbiting groove 51b.

By releasing the hoisting operation cord 107 with the clutch balls 40a, 40b in the energizing-direction orbiting groove 51a or 51b, the clutch balls 40a, 40b are allowed to orbit in the energizing-direction orbiting groove 51a or 51b in the energizing direction F. Thus, the rotation restriction of the clutch apparatus 10 is lifted, and the slats 104 descend by the self-weight of the slats 104 and bottom rail 106.

As seen above, the present embodiment is formed by introducing the clutch apparatus of the first embodiment to the self-weight-descent blind. In this case also, when unwinding the slats 104 until they reach the desired position and then releasing the hoisting operation cord 107, the winding shaft 103 is rotated by a smaller return angle and then the rotation thereof is restricted and the self-weight descent of the slats 104 is stopped. Thus, the slats 104 can be positioned accurately.

While, in the present embodiment, the clutch apparatus 10 is used in the horizontal blind, it may be used in other self-weight-descent shielding apparatuses, including pleated screens and Roman shades.

### Eighth Embodiment

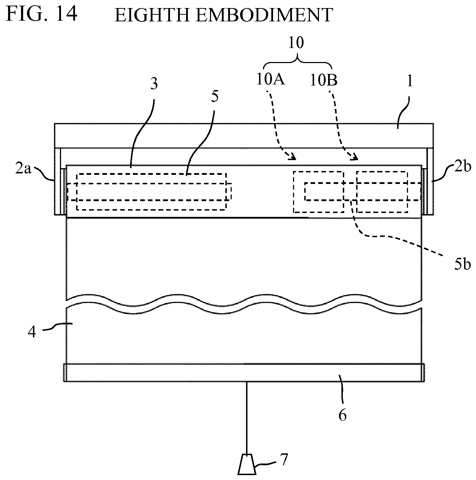

Fig. 14 shows a front view of a roll screen according to an eighth embodiment. The roll screen of the eighth embodiment mainly differs from that of the first embodiment in the configuration of a clutch apparatus 10. This difference will be mainly described below.

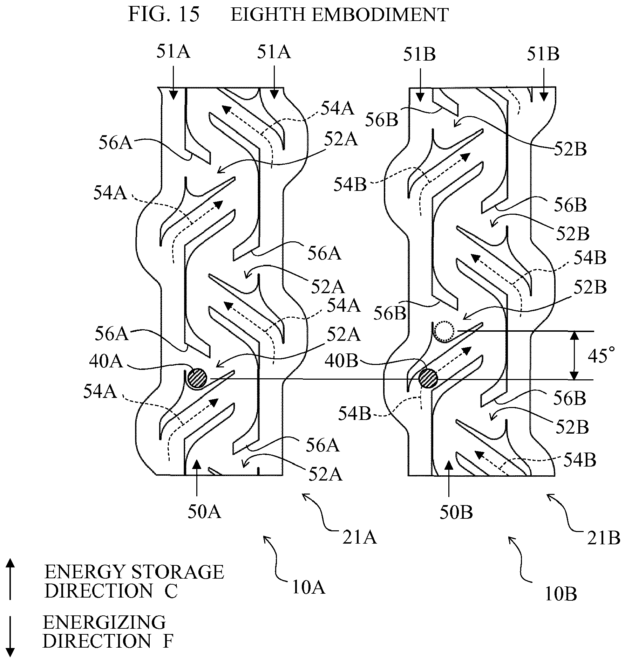

As shown in Fig. 14, the clutch apparatus 10 of the present embodiment consists of two clutch apparatuses having approximately the same configuration: a first clutch apparatus 10A and a second clutch apparatus 10B. The first clutch apparatus 10A and second clutch apparatus 10B have approximately the same configuration as that of the clutch apparatus 10 of the first embodiment except that guide grooves 21A, 21B have shapes different from that of the first embodiment (see Fig. 15) and a single clutch ball is disposed in each of the guide grooves 21A, 21B. The clutch apparatuses 10A, 10B may have a known configuration as disclosed in Japanese Patent No. 3124716, and the configuration and operation described in the patent publication are incorporated herein by reference.

Hereafter, the configuration of the first clutch apparatus 10A and the operation of a clutch ball 40A on the guide groove 21A will be described briefly (the second clutch apparatus 10B has the same configuration and therefore will not be described). The first clutch apparatus 10A includes a clutch drum 20 and a clutch case 30 (see Fig. 3). As shown in Fig. 15, the endless guide groove 21A is formed on the outer circumferential surface of the clutch case 30. The single clutch ball 40A is disposed on the guide groove 21A. The guide groove 21A includes an energy-storage-direction orbiting groove 50A, two left and right energizing-direction orbiting grooves 51A, four stop parts 52A that are out of phase with each other by 90°, four return grooves 54A, and four release grooves 56A. When unwinding a screen 4, the clutch ball 40A orbits in the energizing-direction orbiting groove 50A in the energy storage direction C. Then, by releasing the screen 4, the clutch ball 40A moves in an energy-storage-direction orbiting groove 51A in the energizing direction (see Fig. 15) and is stopped by one of the four stop parts 52A and thus the ascent of the screen 4 is stopped. By unwinding the screen 4 in this state, the clutch ball 40A is guided to an energizing-direction orbiting groove 51A through a release groove 56A. By releasing the screen 4 with the clutch ball 40A in the energizing-direction orbiting groove 51A, the clutch ball 40A orbits in the energizing-direction orbiting groove 51A in the energizing direction and thus the screen 4 is raised.

As shown in Fig. 14, a clutch drum 20 (not shown) of the first clutch apparatus 10A thus configured is relatively non-rotatably mounted on the front end of a fixed shaft 5b fixed to a bracket 2b. A clutch drum 20 (not shown) of the second clutch apparatus 10B having a similar configuration is relatively non-rotatably mounted on the base end of the fixed shaft 5b. Clutch cases 30 of the first clutch apparatus 10A and second clutch apparatus 10B are mounted on the winding pipe 3 and rotated in conjunction with the winding pipe 3.

The clutch drums 20 of the first clutch apparatus 10A and second clutch apparatus 10B are fixed with the guide grooves 21A, 21B out of phase with each other by 45°. That is, as shown in Fig. 15, the configurations of the guide grooves 21A, 21B are shifted from each other by 45°. On the other hand, the clutch ball 40A and clutch ball 40B are in phase. Thus, when the clutch ball 40A of the first clutch apparatus 10A is stopped by a stop part 52A, the clutch ball 40B of the second clutch apparatus 10B is not stopped by a stop part 52B (a state shown in Fig. 15). Conversely, when the clutch ball 40B of the second clutch apparatus 10B is stopped by a stop part 52B, the clutch ball 40A of the first clutch apparatus 10A is not stopped by a stop part 52A.

Due to this configuration, the clutch balls 40A, 40B are more frequently stopped by the stop parts 52A, 52B. Thus, the clutch drum 20 and clutch case 30 are relatively rotated by a smaller return angle and then the relative rotation is restricted.

Specifically, a clutch apparatus 10 described in the above patent publication includes one clutch ball 40 and four stop parts 52 that are out of phase with each other by 90° and therefore the maximum return angle is about 90°. In the present embodiment, on the other hand, the first clutch apparatus 10A and second clutch apparatus 10B each include the four stop parts 52 that are out of phase with each other by 90°, and the guide grooves 21A, 21B of the clutch apparatuses 10A, 10B are out of phase with each other by 45°. Thus, the maximum return angle is reduced to about 45°.

In this configuration also, when unwinding the screen 4 until it reaches the desired position and then releasing the screen, the winding pipe 3 is rotated by a smaller return angle and then the rotation is restricted and the winding of the screen 4 is stopped. As a result, the screen 4 is easily suspended and supported in the desired position.

The present embodiment may be carried out in the following aspects.

- While, in the above embodiment, the guide groove 21A and guide groove are out of phase with each other by 45°, these grooves may be out of phase by any degree as long as the grooves are not in phase.
- In the above embodiment, both the first clutch apparatus 10A and second clutch apparatus 10B are mounted on the fixed shaft 5bX. However, the first clutch apparatus 10A and second clutch apparatus 10B may be disposed in any positions in the winding pipe 3 as long as each clutch drum 20 is non-rotatable with respect to a bracket 2a or the bracket 2b and each clutch case 30 is mounted on the winding pipe 3. For example, the first clutch apparatus 10A may be disposed on the bracket 2a, and the second clutch apparatus 10B may be disposed on the bracket 2b. In this case also, the clutch apparatuses 10A, 10B cooperate with each other and serve as the clutch apparatus 10 of the present invention.
- While, in the above embodiment, the clutch apparatus 10 includes the two clutch apparatuses, the first clutch apparatus 10A and second clutch apparatus 10B, three or more clutch apparatuses having guide grooves that are out of phase with each other may be provided.
- While, in the above embodiment, the guide grooves 21A, 21B are fixed so as to be out of phase with each other by 45°, a phase difference may be made between the clutch balls 40A, 40B rather than making a phase difference between the guide grooves 21A, 21B. In this case, the two clutch cases 30 of the clutch apparatuses 10A, 10B are fixed so as to be shifted from the winding pipe 3 by a predetermined angle.

### Ninth Embodiment

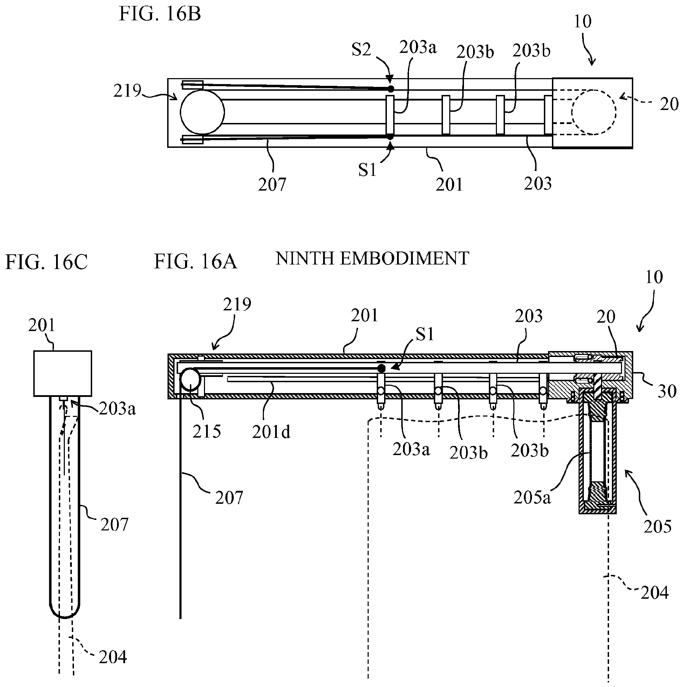

Referring now to Figs. 16 to 18, a ninth embodiment of the present invention will be described. The present embodiment is formed by introducing a clutch apparatus 10 to a curtain rail serving as a shielding apparatus.

Referring now to Figs. 16A to 16C, the overall configuration of the curtain rail of the present embodiment will be described briefly. This curtain rail includes a hanger rail 201, many runners 203a, 203b supported so as to be movable along a support rib 201d of the hanger rail 201, and a curtain 204 suspended from and supported by the runners 203a, 203b and serving as a shielding member. The curtain rail also includes a loop belt 203 that supports the runners 203a, 203b disposed in the hanger rail 201 and serves as a rotor, a clutch drum 20 on which the loop belt 203 is hung at one end of the hanger rail 201 (the right end thereof in Figs. 16A, 16B), and a pulley 219 on which the loop belt 203 is hung at the other end of the hanger rail 201 (the left end thereof in Figs. 16A, 16B). Also, one end and the other end of an operation cord 207 are mounted on a position S1 and a position S2 of the loop belt 203. The central portion of the operation cord 207 is drawn down from the hanger rail 201 through a pulley 215. By operating the operation cord 207, the loop belt 203 can be rotated between the pulley 219 and clutch drum 20 and thus the top runner 203a can be moved.

The curtain rail of the present embodiment also includes energization means 205 that moves the curtain 204 in the close direction (or open direction) through the loop belt 203 by energizing the clutch drum 20 and a clutch apparatus 10 that consists of the clutch drum 20 and a clutch case 30 and restricts movement of the curtain 204 in the close direction by restricting rotation of the clutch drum 20. The energization means 205 includes a coil spring 205a having one end coupled to a housing 205b fixed to the clutch case 30 and the other end coupled to a transmission shaft 205c that rotates integrally with the clutch drum 20. In the present embodiment, the coil spring 205a of the energization means 205 energizes the clutch drum 20 in the direction in which the curtain 204 is closed, and the direction in which the clutch drum 20 is rotated when the curtain 204 is closed is referred to as an "energizing direction."

Due to this configuration, when the clutch drum 20 is rotated in the open direction by operating the operation cord 207, energy is stored in the coil spring 205a. The energy-stored coil spring 205a energizes the clutch drum 20 in the close direction of the curtain 204. The energized clutch drum 20 energizes the runners 203a, 203b in the close direction of the curtain 204 through the loop belt 203.

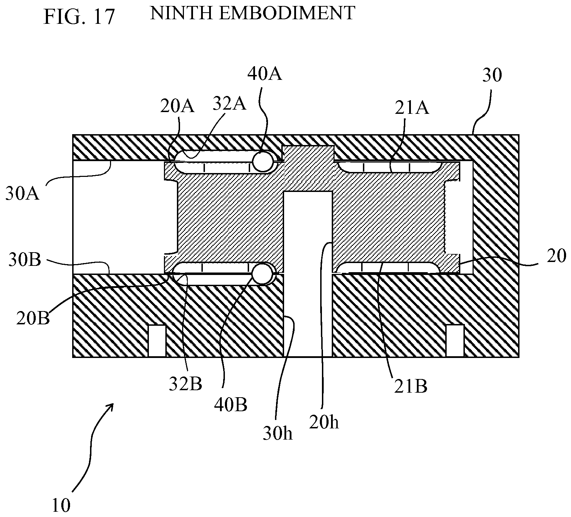

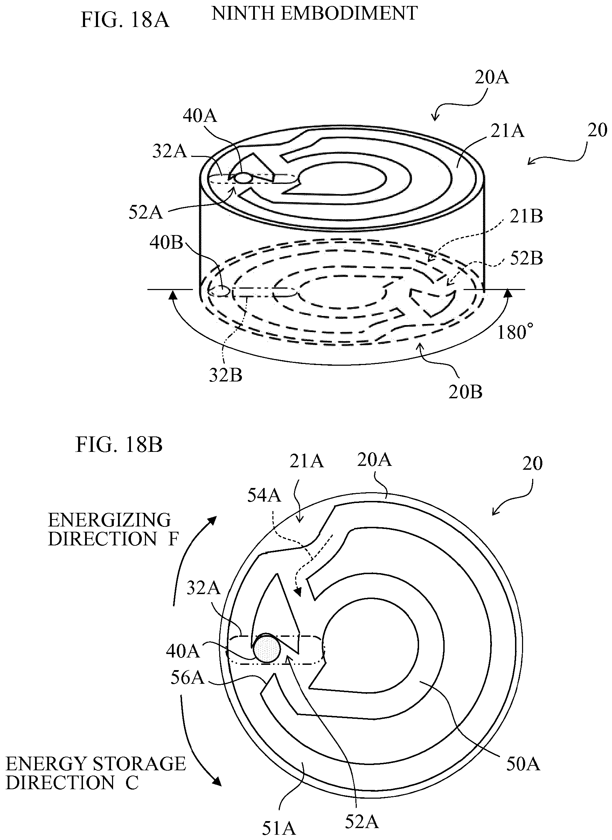

Referring now to Figs. 17 and 18, the configuration and operation of the clutch apparatus 10 of the present embodiment will be described.

As shown in Fig. 17, the clutch apparatus 10 mainly includes the cylindrical clutch drum 20 on which the loop belt 203 is hung and that serves also as a pulley, the clutch case 30 disposed around the perimeter of the clutch drum 20 and fixed to the hanger rail 201, and two clutch balls 40a, 40b. The clutch drum 20 is rotatably supported by the clutch case 30. The clutch drum 20 has, in the rotation center thereof, a rectangular hole 20h that is open downward. The clutch case 30 has a through hole 30h in a position thereof corresponding to the rectangular hole 20h. A transmission shaft 205c is relatively non-rotatably inserted in the rectangular hole 20h through the through hole 30h.

Endless guide grooves 21A, 21B are circumferentially formed on the upper end surface 20A and lower end surface 20B, respectively, of the clutch drum 20. Slide grooves 32A, 32B extending in one outward direction from the vicinity of the through hole 30h are provided on the inner upper surface 30A and inner lower surface 30B opposed to the guide grooves 21A, 21B, of the clutch case 30. The clutch balls 40A, 40B are disposed between the guide grooves 21A, 21B and slide grooves 32A, 32B. The clutch balls 40A, 40B can move in the slide grooves 32A, 32B along the guide grooves 21A, 21B with rotation of the clutch drum 20. In the following description, it is assumed that the clutch balls 40A, 40b move relatively in the guide grooves 21A, 21B.

Next, the guide grooves 21A, 21B will be described. As shown in Fig. 18A, the guide groove 21A and guide groove 21B are in the same shape but out of phase with each other when seen from above. For this reason, the configuration of the guide groove 21A and the operation of the clutch drum 20 based on this configuration will be described below.

As shown in Fig. 18B, the guide groove 21A includes an inner energy-storage-direction orbiting groove 50A, an outer energizing-direction orbiting groove 51A, a stop part 52A, a return groove 54A, and a release groove 56A. The grooves 50A, 51A, 54A, 56A and stop part 52A have functions similar to those of the first embodiment.

In a stop state in which the curtain 204 is partially or completely open and the operation cord 207 is not in operation, the clutch ball 40A is guided to the stop part 52A, as will be described later. For this reason, a state in which the clutch balls 40A, 40B are located on the stop parts 52A as shown in Fig. 18B is defined as an initial state. In this state, the clutch drum 20 is energized in the close direction and thus the clutch balls 40A are stopped by the stop parts 52A. For this reason, the clutch drum 20 is not rotated, and the curtain 204 is kept open. When the clutch drum 20 is rotated in the energy storage direction C (open direction) by operating the operation cord 207 in this state, the clutch ball 40A moves along the release groove 56A and enters the energizing-direction orbiting groove 51A. By releasing the operation cord 207 in this state, the clutch drum 20 is rotated in the energizing direction F (close direction) by the energizing force. At this time, the clutch ball 40A orbits in the energizing-direction orbiting groove 51A and does not enter the stop part 52A. Thus, the curtain 204 automatically moves in the close direction without stopping.

When the clutch drum 20 is rotated in the energy storage direction C (open direction) by operating the operation cord 207 in this state, the clutch ball 40A in the stop part 52A moves to the energizing-direction orbiting groove 51A through the release groove 56A. When the clutch drum 20 is further rotated in the energy storage direction C, the clutch balls 40A, 40B are guided to the energy-storage-direction orbiting groove 50A along the return groove 54A. When the clutch drum 20 is further rotated in the open direction in this state, the clutch ball 40A orbits in the energy-storage-direction orbiting groove 50A and does not enter the stop part 52A. For this reason, the movement of the curtain 204 in the open direction is not blocked.

By releasing the operation cord 207 with the clutch ball 40A located in the energy-storage-direction orbiting groove 50A, the clutch drum 20 is rotated in the energizing direction F. Thus, the clutch ball 40A moves toward the stop part 52A and is stopped by the stop part 52A. Thus, the curtain 204 is kept open in a predetermined position.

In addition to the guide groove 21A, the clutch drum 20 of the present embodiment has the guide groove 21B having a similar configuration and function. As shown in Fig. 18A, the guide groove 21A and guide groove 21B are formed so as to be out of phase with each other by 180°. In other words, the positions of the stop part 52A and stop part 52B are shifted from the rotation axis of the clutch drum 20 by 180°. On the other hand, the slide grooves 32A, 32B and clutch balls 40A, 40B are in phase with each other. Thus, when the clutch ball 40A is stopped by the stop part 52A on the guide groove 21A, the clutch ball 40B is not stopped by the stop part 52B on the guide groove 21B; when the clutch ball 40B is stopped by the stop part 52B, the clutch ball 40A is not stopped by the stop part 52A.

Due to this configuration, the clutch balls 40A, 40B are more frequently stopped by the stop parts 52A, 52B. The clutch drum 20 and clutch case 30 are rotated relatively by a smaller return angle and then the relative rotation is restricted. Thus, when releasing the operation cord 207, the curtain 204 is moved in a smaller amount in the close direction and is therefore easily maintained in the desired position.

The present embodiment may be carried out in the following aspects.
•The means for energizing the clutch drum 20 may be other means such as a spiral spring in place of the coil spring 205a. An energizing force may be directly applied to the loop belt 203 by directly connecting a tension spring to the loop belt 203 and then pulling an end of the hanger rail 201 or by mounting a cord having a weight connected thereto to the loop belt 203. Or, an energizing force may be directly applied to the top runner 203a or operation cord 207. In any case, an energizing force that moves the top runner 203a in one direction is directly or indirectly applied.

The shape of the guide groove 21A (guide groove 21B) shown in Fig. 18 is illustrative only, and other configurations having similar functions may be used. For example, as in the first to sixth and eighth embodiments, the stop parts 52A may be provided in multiple positions in the circumferential direction. Or, multiple clutch balls 40A (40B) may be disposed in a single guide groove 40A (guide groove 40B).

The guide grooves 21A, 21B may be provided on the clutch case 30, and the slide grooves 32A, 32B may be provided on the clutch drum 20.

The configuration of the clutch apparatus described in the present embodiment can also be applied to curtain rails that do not include the loop belt 203 and where the operation cord 207 is hung on the clutch drum 20.

### Tenth Embodiment

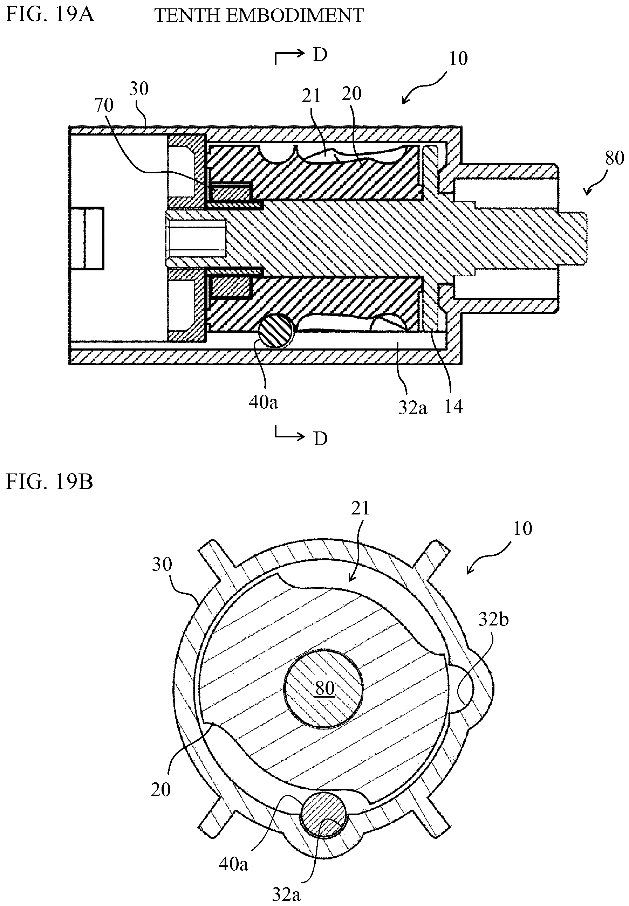

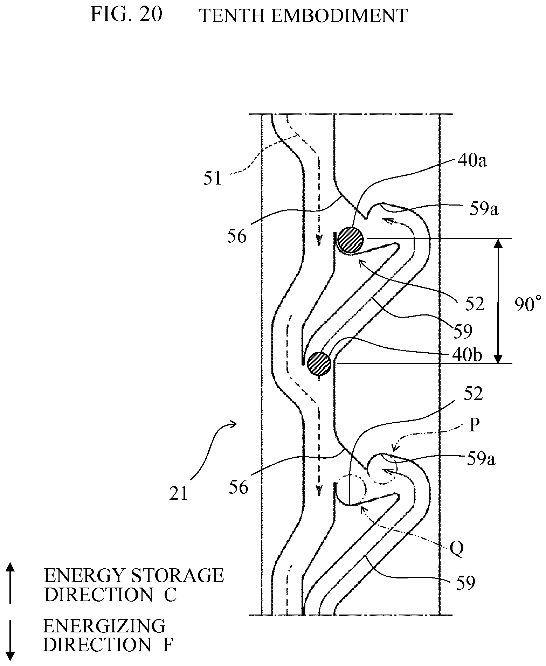

Figs. 19 and 20 show a clutch apparatus 10 according to a tenth embodiment. The clutch apparatus 10 of the present embodiment mainly differs from that of the first embodiment in that a one-way clutch 70 is disposed between a clutch drum 20 and a clutch case 30 and that the clutch drum 20 and clutch case 30 both rotate relatively around a central axis 80. These differences will be mainly described.

The configuration of the clutch apparatus 10 of the present embodiment will be described briefly. As shown in Figs. 19A and 19B, the clutch apparatus 10 mainly includes the central axis 80 that is non-rotatably supported by a bracket 2b (see Fig. 1), the cylindrical clutch drum 20 that is relatively rotatably mounted on the central axis 80, the cylindrical clutch case 30 that is disposed around the perimeter of the clutch drum 20 and fixed to a winding pipe 3, the one-way clutch 70 that is disposed between the central axis 80 and clutch drum 20, and two clutch balls 40a, 40b.

As shown in Fig. 20, the clutch drum 20 has an endless circumferential guide groove 21 on the outer circumferential surface thereof. The clutch case 30 is mounted on the winding pipe 3 so as to rotate integrally therewith. As shown in Fig. 19B, the clutch case 30 has axially extending two slide grooves 32a, 32b on the inner circumferential surface thereof. In the present embodiment, the slide groove 32a and slide groove 32b are disposed circumferentially away from each other by 90°, as shown in Fig. 19B. The one-way clutch 70 is one having an existing configuration. The one-way clutch 70 is mounted so as to allow rotation of the clutch drum 20 in the unwinding direction with respect to the central axis 80 and to restrict rotation of the clutch drum 20 in the winding direction with respect thereto.

The guide groove 21 consists of an energizing-direction orbiting groove 51 in which the clutch balls 40a, 40b orbit when the clutch case 30 is rotated in the winding direction [the direction in which the clutch case 30 is energized by a coil spring 5 (see Fig. 1)] with respect to the clutch drum 20 and branch loops 59 that are branched from the energizing-direction orbiting groove 51. Each branch loop 59 has a lock groove 59a and a stop part 52. Note that in the present embodiment, the guide groove 21 extending over the entire circumference of the clutch drum 20 has two branch loops 59 (stop parts 52).

The operation of a roll screen including the clutch apparatus 10 described above will be described below. By pulling down and unwinding a screen 4 of the roll screen against the energizing force of the coil spring 5 (see Fig. 1), the clutch case 30 is rotated through the winding pipe 3. Thus, the clutch balls 40a, 40b move in the energy storage direction C shown in Fig. 7, and the clutch ball 40A (or clutch ball 40B) is guided to the lock groove 59a of a branch loop 59 and placed in a first engagement state P. The winding pipe 3, clutch case 30, and clutch drum 20 are rotated integrally in the unwinding direction.

By unwinding the screen 4 (see Fig. 1) until it reaches a predetermined position and then releasing it, the screen 4 is slightly wound by the energizing force of the coil spring 5 and then the winding is stopped. Specifically, by releasing the screen 4, the winding pipe 3 and the clutch case 30, which rotates integrally therewith, are rotated in the winding direction; the clutch ball 40A (40b) is guided to a stop part 52 and placed in a second engagement state Q in which it is engaged with the clutch drum 20; and since the clutch drum 20 is made non-rotatable in the winding direction by the one-way clutch 70, the rotation of the winding pipe 3 is restricted and the winding of the screen 4 is stopped.

Then, by slightly unwinding the screen 4 whose winding is stopped, the clutch ball 40A (40b) comes into contact with a release groove 56 opposed to the stop part 52 and moves toward the energizing-direction orbiting groove 51 (toward the left side in Fig. 20). Thus, the rotation restriction of the winding pipe 3 in the winding direction is lifted. Then, by stopping unwinding the screen 4 and releasing it, the clutch ball 40a and clutch ball 40b orbit in the energizing-direction orbiting groove 51 of the guide groove 21 in the energizing direction F, and the screen 4 is wound by the energizing force of the coil spring 5.

In the present embodiment, the two clutch balls 40a, 40b are disposed on the guide groove 21. Thus, the probability that a clutch ball is guided to a branch loop 59 is increased compared to a case in which the number of clutch balls is one. Thus, the amount of screen that is returned can be reduced before the clutch ball 40A or clutch ball 40B located in the energizing-direction orbiting groove 51 is guided to a branch loop 59 and placed in a first engagement state P. As a result, the screen 4 is easily stopped in a predetermined position.

### Description of Reference Signs

C: energy storage direction, F: energizing direction, 10: clutch apparatus, 20: clutch drum, 21: guide groove, 30: clutch case, 50: energy-storage-direction orbiting groove (other-direction orbiting groove), 51: energizing-direction orbiting groove (one-direction orbiting direction), 52: stop part, 53: pass part, 54: return groove, 55: lead groove, 56: release groove

## Claims

1. A clutch apparatus (10) comprising:
at least one clutch drum (20);
a clutch case (30) disposed around a perimeter of the clutch drum (20), wherein
the clutch apparatus (10) is capable of selectively switching between restriction and allowance of relative rotation between the clutch drum (20) and the clutch case (30) in one direction (F);
an endless guide groove (21) circumferentially provided on one of an outer surface of the clutch drum (20) and an inner surface of the clutch case (30);
slide grooves (32a, 32b) axially provided on the other of the outer circumferential surface of the clutch drum (20) or the inner surface of the clutch case (30); and
a plurality of moving objects (40a, 40b) disposed between the guide groove (21) and the slide grooves (32a, 32b) and being capable of relatively moving along the guide groove (21) with the relative rotation between the clutch drum (20) and the clutch case (30), wherein
the guide groove (21) includes:
at least one stop part (52) capable of stopping the moving objects (40a, 40b), wherein when the moving objects (40a, 40b) are stopped by the stop part (52), relative rotation between the clutch drum (20) and the clutch case (30) in the one direction (F) is restricted;
a one-direction orbiting groove (51) in which the moving objects (40a, 40b) orbit when the clutch drum (20) and the clutch case (30) are relatively rotated in the one direction (F);
**characterized in, that** the guide groove (21) further includes:
an other-direction orbiting groove (50) in which the moving objects (40a, 40b) orbit when the clutch drum (20) and the clutch case (30) are relatively rotated in the other direction (C); and
at least one return groove (54) that guides the moving objects (40a, 40b) from the one-direction orbiting groove (51) to the other-direction orbiting groove (50) when the clutch drum (20) and the clutch case (30) are relatively rotated in the other direction (C) with the moving objects (40a, 40b) located in the one-direction orbiting groove (51); and
the clutch apparatus (10) is configured such that at least two of the moving objects (40a, 40b) are stopped by the stop part (52) at different timings, and the clutch apparatus (10) has at least one of configurations 1) and 2), wherein in configuration 1) the moving objects (40a, 40b) are disposed on a single guide groove (21), and in configuration 2) the guide groove (21) includes a plurality of guide grooves (21A, 21B) and each guide groove includes at least one moving object (40A, 40B).

2. The clutch apparatus (10) of Claim 1, wherein
the guide groove (21) further includes:
at least one pass part (53) that is disposed between the other-direction orbiting groove (50) and the one-direction orbiting groove (51) and circumferentially away from the stop part (52) so as to guide the moving objects (40a, 40b) to the one-direction orbiting groove (51) without restricting the relative rotation between the clutch drum (20) and the clutch case (30) in the one direction (F);
a plurality of lead grooves (55) that guide the moving objects (40a, 40b) from the other-direction orbiting groove (50) to the stop part (52) or the pass part (53) when the clutch drum (20) and the clutch case (30) are relatively rotated in the one direction (F) with the moving objects (40a, 40b) located in the other-direction orbiting groove (50); and
a release groove (56) that guides the moving objects (40a, 40b) from the stop part (52) or the pass part (53) to the one-direction orbiting groove (51) when the clutch drum (20) and the clutch case (30) are relatively rotated in the other direction (C) with the moving objects (40a, 40b) located on the stop part (52) or the pass part (53).

3. The clutch apparatus (10) of Claim 2, wherein
the guide groove (21) includes a plurality of the stop parts (52) and a plurality of the pass parts (53), and
one of the pass parts (53) forms a part of the return groove (54).

4. The clutch apparatus (10) of Claim 3, wherein when one moving object (40a, 40b) is located on any pass part (53) or in a position that is in phase with the pass part (53), at least one moving object (40a, 40b) other than the one moving object (40a, 40b) is located on one stop part (52) or in a position that is in phase with the one stop part (53).

5. The clutch apparatus (10) of any one of Claims 2 to 4, wherein
the stop parts (52) or the pass parts (53) are disposed on the guide groove (21) at equal intervals, and
the moving objects (40a, 40b) are away from each other by an integral multiple of one of the intervals.

6. The clutch apparatus (10) of Claim 5, wherein
the guide groove (21) is divided into a stop region (A1) in which a plurality of stop parts (52) are disposed and a pass region (A2) in which a plurality of pass parts (53) are disposed, and
the single return groove (54) is disposed in a position in the one direction (F) in the pass region (A2) with respect to the single one-direction orbiting groove (51).

7. The clutch apparatus (10) of Claim 6, wherein
the moving objects (40a, 40b) consist of two moving objects disposed on the guide groove (21) at an interval of about 180°,
approximately a half of a circumference of the guide groove (21) is used as a stop region (A1),
approximately another half of the circumference of the guide groove (21) is used as a pass region (A2), and
when one object (40a, 40b) is located on any pass part (53) or in a position that is in phase with the pass part (53), the other moving object (40a, 40b) is located on any one stop part (52) or in a position that is in phase with the one stop part (52).

8. The clutch apparatus (10) of any one of Claims 1 to 7, wherein
the guide groove (21) is provided on an outer circumferential surface of the clutch drum (20),
the moving objects (40a, 40b) are disposed between the guide groove (21) and slide grooves (32a, 32b) axially provided in at least two positions on an inner circumferential surface of the clutch case (30), and
the moving objects (40a, 40b) relatively move in the guide groove (21) with rotation of the clutch drum (20) while moving in the slide grooves (32a, 32b).

9. The clutch apparatus (10) of any one of Claims 1 to 8, wherein the guide groove (21) is disposed on at least one end surface of the clutch drum (20).

10. A shielding apparatus comprising:
the clutch apparatus (10) of any one of Claims 1 to 9;
a rotor (3) that is energized in one direction (F); and
a shielding member (4) that can be opened and closed with rotation of the rotor (3), wherein
the moving objects (10) relatively move along the guide groove (21) with rotation of the rotor (3).

## Patentansprüche

1. Kupplungsvorrichtung (10), umfassend:
zumindest eine Kupplungstrommel (20);
ein Kupplungsgehäuse (30), das um einen Umfang der Kupplungstrommel (20) angeordnet ist, wobei
die Kupplungsvorrichtung (10) in der Lage ist, selektiv zwischen der Beschränkung und der Zulassung einer relativen Drehung zwischen der Kupplungstrommel (20) und dem Kupplungsgehäuse (30) in einer Richtung (F) umzuschalten;
eine endlose Führungsnut (21), die in Umfangsrichtung entweder auf einer Außenfläche der Kupplungstrommel (20) oder einer Innenfläche des Kupplungsgehäuses (30) vorgesehen ist;
Gleitnuten (32a, 32b), die axial an der anderen der äußeren Umfangsfläche der Kupplungstrommel (20) oder der Innenfläche des Kupplungsgehäuses (30) vorgesehen ist; und
eine Mehrzahl beweglicher Objekte (40a, 40b), die zwischen der Führungsnut (21) und den Gleitnuten (32a, 32b) angeordnet und in der Lage sind, sich mit der relativen Drehung zwischen der Kupplungstrommel (20) und dem Kupplungsgehäuse (30) entlang der Führungsnut (21) relativ zu bewegen, wobei
die Führungsnut (21) Folgendes umfasst:
zumindest ein Anschlagteil (52), das in der Lage ist, die beweglichen Objekte (40a, 40b) zu stoppen, wobei, wenn die beweglichen Objekte (40a, 40b) durch das Anschlagteil (52) gestoppt werden, die relative Drehung zwischen der Kupplungstrommel (20) und dem Kupplungsgehäuse (30) in der einen Richtung (F) gesperrt wird;
eine in einer Richtung umlaufende Nut (51), in der die beweglichen Objekte (40a, 40b) umlaufen, wenn die Kupplungstrommel (20) und das Kupplungsgehäuse (30) in der einen Richtung (F) relativ gedreht werden;
**dadurch gekennzeichnet, dass**
die Führungsnut (21) ferner Folgendes umfasst:
eine in der anderen Richtung umlaufende Nut (50), in der die beweglichen Objekte (40a, 40b) umlaufen, wenn die Kupplungstrommel (20) und das Kupplungsgehäuse (30) in der anderen Richtung (C) relativ gedreht werden; und
zumindest eine Rückführungsnut (54), die die beweglichen Objekte (40a, 40b) von der in einer Richtung umlaufenden Nut (51) zu der in der anderen Richtung umlaufenden Nut (50) führt, wenn die Kupplungstrommel (20) und das Kupplungsgehäuse (30) in der anderen Richtung (C) relativ gedreht werden, während sich die beweglichen Objekte (40a, 40b) in der in einer Richtung umlaufenden Nut (51) befinden; und
die Kupplungsvorrichtung (10) so konfiguriert, dass zumindest zwei der beweglichen Objekte (40a, 40b) zu unterschiedlichen Zeitpunkten durch das Anschlagteil (52) gestoppt werden und die Kupplungsvorrichtung (10) zumindest eine der Konfigurationen 1) und 2) aufweist, wobei in der Konfiguration 1) die beweglichen Objekte (40a, 40b) auf einer einzigen Führungsnut (21) angeordnet sind und in Konfiguration 2) die Führungsnut (21) mehrere Führungsnuten (21A, 21B) umfasst und jede Führungsnut zumindest ein bewegliches Objekt (40A, 40B) umfasst.

2. Kupplungsvorrichtung (10) nach Anspruch 1, wobei
die Führungsnut (21) ferner Folgendes umfasst:
zumindest ein Durchgangsteil (53), das zwischen der in der anderen Richtung umlaufenden Nut (50) und der in einer Richtung umlaufenden Nut (51) und in Umfangsrichtung vom Anschlagteil (52) entfernt angeordnet ist, um die beweglichen Objekte (40a, 40b) zu der in einer Richtung umlaufenden Nut (51) zu führen, ohne die relative Drehung zwischen der Kupplungstrommel (20) und dem Kupplungsgehäuse (30) in der einen Richtung (F) zu sperren;
ein Mehrzahl von Leitnuten (55), die die beweglichen Objekte (40a, 40b) von der in der anderen Richtung umlaufenden Nut (50) zum Anschlagteil (52) oder zum Durchgangsteil (53) führen, wenn die Kupplungstrommel (20) und das Kupplungsgehäuse (30) in der einen Richtung (F) relativ gedreht werden, während sich die beweglichen Objekte (40a, 40b) in der in der anderen Richtung umlaufenden Nut (50) befinden; und
eine Freigabenut (56), die die beweglichen Objekte (40a, 40b) vom Anschlagteil (52) oder vom Durchgangsteil (53) zu der in einer Richtung umlaufenden Nut (51) führt, wenn die Kupplungstrommel (20) und das Kupplungsgehäuse (30) in der anderen Richtung (C) relativ gedreht werden, während sich die beweglichen Objekte (40a, 40b) am Anschlagteil (52) oder am Durchgangsteil (53) befinden.

3. Kupplungsvorrichtung (10) nach Anspruch 2, wobei
die Führungsnut (21) eine Mehrzahl von Anschlagteilen (52) und eine Mehrzahl von Durchgangsteilen (53) umfasst und
eines der Durchgangsteile (53) einen Teil der Rückführungsnut (54) ausbildet.

4. Kupplungsvorrichtung (10) nach Anspruch 3, wobei, wenn sich ein bewegliches Objekt (40a, 40b) an einem beliebigen Durchgangsteil (53) oder in einer mit dem Durchgangsteil (53) phasengleichen Position befindet, sich zumindest ein anderes bewegliches Objekt (40a, 40b) als das eine bewegliche Objekt (40a, 40b) an einem Anschlagteil (52) oder in einer mit dem einen Anschlagteil (53) phasengleichen Position befindet.

5. Kupplungsvorrichtung (10) nach einem der Ansprüche 2 bis 4, wobei
die Anschlagteile (52) oder die Durchgangsteile (53) in gleichen Abständen auf der Führungsnut (21) angeordnet sind und
die beweglichen Objekte (40a, 40b) um ein ganzzahliges Vielfaches eines der Intervalle voneinander entfernt sind.

6. Kupplungsvorrichtung (10) nach Anspruch 5, wobei
die Führungsnut (21) in einen Anschlagbereich (A1), in dem eine Mehrzahl von Anschlagteilen (52) angeordnet sind, und einen Durchgangsbereich (A2), in dem eine Mehrzahl von Durchgangsteile, (53) angeordnet sind, unterteilt ist, und
die einzelne Rückführungsnut (54) in einer Position in der einen Richtung (F) im Durchgangsbereich (A2) in Bezug auf die einzelne in einer Richtung umlaufende Nut (51) angeordnet ist.

7. Kupplungsvorrichtung (10) nach Anspruch 6, wobei
die beweglichen Objekte (40a, 40b) aus zwei beweglichen Objekten bestehen, die auf der Führungsnut (21) in einem Abstand von etwa 180° angeordnet sind,
etwa eine Hälfte eines Umfangs der Führungsnut (21) als ein Anschlagbereich (A1) dient,
etwa eine andere Hälfte des Umfangs der Führungsnut (21) als ein Durchgangsbereich (A2) dient und,
wenn sich ein Objekt (40a, 40b) an einem beliebigen Durchgangsteil (53) oder in einer mit dem Durchgangsteil (53) phasengleichen Position befindet, sich das andere bewegliche Objekt (40a, 40b) an einem beliebigen Anschlagteil (52) oder in einer mit einem Anschlagteil (52) phasengleichen Position befindet.

8. Kupplungsvorrichtung (10) nach einem der Ansprüche 1 bis 7, wobei
die Führungsnut (21) an einer äußeren Umfangsfläche der Kupplungstrommel (20) vorgesehen ist,
die beweglichen Objekte (40a, 40b) zwischen der Führungsnut (21) und Gleitnuten (32a, 32b), die axial in zumindest zwei Positionen auf einer inneren Umfangsfläche des Kupplungsgehäuses (30) vorgesehen sind, angeordnet sind und
sich die beweglichen Objekte (40a, 40b) in der Führungsnut (21) mit der Drehung der Kupplungstrommel (20) relativ bewegen, während sie sich in den Gleitnuten (32a, 32b) bewegen.

9. Kupplungsvorrichtung (10) nach einem der Ansprüche 1 bis 8, wobei die Führungsnut (21) an zumindest einer Endfläche der Kupplungstrommel (20) angeordnet ist.

10. Abschirmungsvorrichtung, umfassend:
die Kupplungsvorrichtung (10) nach einem der Ansprüche 1 bis 9;
einen Rotor (3), der in einer Richtung (F) erregt wird; und
ein Abschirmungselement (4), das bei Drehung des Rotors (3) geöffnet und geschlossen werden kann, wobei
sich die beweglichen Objekte (10) mit der Drehung des Rotors (3) entlang der Führungsnut (21) relativ bewegen.

## Revendications

1. Appareil d'embrayage (10) comprenant :
au moins un tambour d'embrayage (20) ;
un carter d'embrayage (30) disposé autour d'un périmètre du tambour d'embrayage (20),
l'appareil d'embrayage (10) pouvant commuter de façon sélective entre le blocage et la libération de la rotation relative entre le tambour d'embrayage (20) et le carter d'embrayage (30) dans une direction (F) ;
une rainure de guidage sans fin (21) fournie de manière circonférentielle sur l'une surface parmi une surface extérieure du tambour d'embrayage (20) et une surface intérieure du carter d'embrayage (30) ;
des rainures de coulissement (32a, 32b) fournies axialement sur l'autre surface parmi la surface circonférentielle extérieure du tambour d'embrayage (20) ou la surface intérieure du carter d'embrayage (30) ; et
une pluralité d'objets mobiles (40a, 40b) disposés entre la rainure de guidage (21) et les rainures de coulissement (32a, 32b) et étant capable de se déplacer de façon relative le long de la rainure de guidage (21) avec la rotation relative entre le tambour d'embrayage (20) et le carter d'embrayage (30),
la rainure de guidage (21) comprenant :
au moins une partie d'arrêt (52) capable d'arrêter les objets mobiles (40a, 40b), une rotation relative entre le tambour d'embrayage (20) et le carter d'embrayage (30) étant bloquée dans la direction (F) lorsque les objets mobiles (40a, 40b) sont arrêtés par la partie d'arrêt (52) ;
une rainure d'orbite pour une direction (51) dans laquelle les objets mobiles (40a, 40b) tournent lorsque le tambour d'embrayage (20) et le carter d'embrayage (30) sont pivotés de façon relative dans l'une direction (F) ;
**caractérisé en ce que** la rainure de guidage (21) comprend en outre :
une rainure d'orbite pour une autre direction (50) dans laquelle les objets mobiles (40a, 40b) tournent lorsque le tambour d'embrayage (20) et le carter d'embrayage (30) sont pivotés de façon relative dans l'autre direction (C) ; et
au moins une rainure de retour (54) qui guide les objets mobiles (40a, 40b) de la rainure d'orbite pour une direction (51) vers la rainure d'orbite pour une autre direction (50) lorsque le tambour d'embrayage (20) et le carter d'embrayage (30) sont pivotés relativement dans l'autre direction (C) avec les objets mobiles (40a, 40b) situés dans la rainure d'orbite pour une direction (51) ; et
l'appareil d'embrayage (10) étant conçu de telle sorte qu'au moins deux des objets mobiles (40a, 40b) sont arrêtés par la partie d'arrêt (52) à des instants différents, et l'appareil d'embrayage (10) ayant au moins une configuration parmi les configurations 1) et 2), les objets mobiles (40a, 40b) étant disposés sur une seule rainure de guidage (21) dans la configuration 1), et la rainure de guidage (21) comprenant une pluralité de rainures de guidage (21A, 21B) et chaque rainure de guidage comprenant au moins un objet mobile (40A, 40B) dans la configuration 2).

2. Appareil d'embrayage (10) selon la revendication 1,
la rainure de guidage (21) comprenant en outre :
au moins une partie de passage (53) qui est disposée entre la rainure d'orbite pour une autre direction (50) et la rainure d'orbite pour une direction (51) et à distance de la partie d'arrêt (52) de manière circonférentielle afin de guider les objets mobiles (40a, 40b) vers la rainure d'orbite pour une direction (51) sans bloquer la rotation relative entre le tambour d'embrayage (20) et le carter d'embrayage (30) dans l'une direction (F) ;
une pluralité de rainures-guides (55) qui guident les objets mobiles (40a, 40b) de la rainure d'orbite pour une autre direction (50) vers la partie d'arrêt (52) ou vers la partie de passage (53) lorsque le tambour d'embrayage (20) et le carter d'embrayage (30) sont pivotés relativement dans l'une direction (F) avec les objets mobiles (40a, 40b) situés dans la rainure d'orbite pour une autre direction (50) ; et
une rainure de libération (56) qui guide les objets mobiles (40a, 40b) de la partie d'arrêt (52) ou de la partie de passage (53) vers la rainure d'orbite pour une direction (51) lorsque le tambour d'embrayage (20) et le carter d'embrayage (30) sont pivotés relativement dans l'autre direction (C) avec les objets mobiles (40a, 40b) situés sur la partie d'arrêt (52) ou sur la partie de passage (53).

3. Appareil d'embrayage (10) selon la revendication 2,
la rainure de guidage (21) comprenant une pluralité de parties d'arrêt (52) et une pluralité de parties de passage (53), et
l'une des parties de passage (53) formant une partie de la rainure de retour (54).

4. Appareil d'embrayage (10) selon la revendication 3, lorsqu'un objet mobile (40a, 40b) est situé sur une quelconque partie de passage (53) ou dans une position qui est en phase avec la partie de passage (53), au moins un objet mobile (40a, 40b) autre que l'un objet mobile (40a, 40b) étant situé sur l'une partie d'arrêt (52) ou dans une position qui est en phase avec l'une partie d'arrêt (53).

5. Appareil d'embrayage (10) selon l'une quelconque des revendications 2 à 4,
les parties d'arrêt (52) ou les parties de passage (53) étant disposées sur la rainure de guidage (21) à intervalles égaux, et
les objets mobiles (40a, 40b) étant à distance les uns des autres par un multiple entier de l'un des intervalles.

6. Appareil d'embrayage (10) selon la revendication 5,
la rainure de guidage (21) étant divisée en une région d'arrêt (A1) dans laquelle une pluralité de parties d'arrêt (52) sont disposées et en une région de passage (A2) dans laquelle une pluralité de parties de passage (53) sont disposées, et
la rainure de retour (54) unique étant disposée dans une position dans l'une direction (F) dans la région de passage (A2) relativement à la rainure d'orbite pour une direction (51) unique.

7. Appareil d'embrayage (10) selon la revendication 6,
les objets mobiles (40a, 40b) consistant en deux objets mobiles disposés sur la rainure de guidage (21) à un intervalle d'environ 180°,
approximativement une moitié d'une circonférence de la rainure de guidage (21) étant utilisée comme une région d'arrêt (A1),
approximativement une autre moitié d'une circonférence de la rainure de guidage (21) étant utilisée comme une région de passage (A2), et
lorsqu'un objet (40a, 40b) est situé sur une quelconque partie de passage (53) ou dans une position qui est en phase avec la partie de passage (53), l'autre objet mobile (40a, 40b) étant situé sur une quelconque partie d'arrêt (52) ou dans une position qui est en phase avec l'une partie d'arrêt (52),.

8. Appareil d'embrayage (10) selon l'une quelconque des revendications 1 à 7,
la rainure de guidage (21) étant fournie sur une surface circonférentielle extérieure du tambour d'embrayage (20).
les objets mobiles (40a, 40b) étant disposés entre la rainure de guidage (21) et les rainures de coulissement (32a, 32b) fournis axialement dans au moins deux positions sur une surface circonférentielle intérieure du carter d'embrayage (30), et
les objets mobiles (40a, 40b) se déplaçant de façon relative dans la rainure de guidage (21) avec rotation du tambour d'embrayage (20) lors du déplacement dans les rainures de coulissement (32a, 32b).

9. Appareil d'embrayage (10) selon l'une quelconque des revendications 1 à 8, la rainure de guidage (21) étant disposée sur au moins une surface d'extrémité du tambour d'embrayage (20).

10. Appareil de blindage comprenant :
l'appareil d'embrayage (10) selon l'une quelconque des revendications 1 à 9 ;
un rotor (3) qui est excité dans une direction (F) ; et
un élément de blindage (4) qui peut être ouvert et fermé lors de la rotation du rotor (3),
les objets mobiles (10) se déplaçant de façon relative le long de la rainure de guidage (21) lors de la rotation du rotor (3).
